(19) Europäisches Patentamt
European Patent Office
Office européen des brevets

(11) Numéro de publication: **0 135 454**
**B1**

# (12) FASCICULE DE BREVET EUROPÉEN

(45) Date de publication du fascicule du brevet: **31.05.89**

(51) Int. Cl.⁴: **C 07 F 9/38**, C 07 F 9/40, A 01 N 57/18

(21) Numéro de dépôt: **84420127.7**

(22) Date de dépôt: **25.07.84**

## (54) Herbicides de type sulfonimide à groupe aminométhylphosphonique.

(30) Priorité: **27.07.83 FR 8312620**
**23.02.84 FR 8402988**

(43) Date de publication de la demande:
**27.03.85 Bulletin 85/13**

(45) Mention de la délivrance du brevet:
**31.05.89 Bulletin 89/22**

(84) Etats contractants désignés:
**AT BE CH DE FR GB IT LI LU NL SE**

(56) Documents cité:
**EP-A-0 055 695**
**DE-B-2 166 573**
**FR-A-2 193 830**
**FR-A-2 281 936**

(73) Titulaire: **RHONE- POULENC AGROCHIMIE, 14- 20, rue Pierre Baizet, F-69009 Lyon (FR)**

(72) Inventeur: **Borrod, Guy, 38 bis rue des Granges, F-69005 - Lyon (FR)**
Inventeur: **Lacroix, Guy, 332 F Balmont La Duchère, F-69009 - Lyon (FR)**

(74) Mandataire: **Brachotte, Charles, RHONE- POULENC AGROCHIMIE BP 9163- 09, F-69263 Lyon Cedex 1 (FR)**

EP 0 135 454 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

LIBER, STOCKHOLM 1989

## Description

La présente invention concerne de nouveaux herbicides de la famille chimique des sulfonimides à groupe aminométhylphosphonique, ainsi que des produits intermédiaires pour la préparation de ces herbicides, les procédés de préparation des ces divers produits, et l'application des dits herbicides en agriculture.

On connait de nombreux produits à groupe aminométhylphosphonique ayant des propriétés herbicides, notamment dans les brevets français 2 129 327, 2 281 375, 2 251 569, 2 413 398, 2 463 149, européens 53 871, 54 382, 73 574, américains US 3 160 632, 3 455 675, 3 868 407, 4 388 103, 4 397 676, anglais 2 090 596, mondial WO 83/03608, belges 894 244, 894 245, 894 590, 894 591, 894 592, 894 593, 894 594, 894 595.

On connaît aussi de nombreux produits intermédiaires dans la préparation de tels produits, notamment dans les brevets européens 81 459, 97 522, 55 695, français 2 193 830, américains 3 835 000 et 4 422 982.

Il est cependant toujours souhaitable d'élargir le domaine des herbicides disponibles, afin de mieux répondre à la totalité des besoins des agriculteurs, ainsi que le domaine des produits intermédiaires permettant d'y accéder afin de disposer de voies nouvelles de synthèse. On connaissait bien certains amides à groupe aminométhylphosphonique, mais ces produits étaient soit peu actifs soit inactifs.

Ainsi le brevet allemand délivré n° 2 166 573 décrit de nombreux amides à groupe amino méthyl phosphonique (col. 17, 18, 19, 20). Ces amides bien que présentés comme herbicides manifestent à 4,48 kg/ha une activité nulle ou, dans le meilleur des cas, très inférieure à celle indiquée pour les sels d'acide correspondant (voir par exemple le composé n° XXXIII col. 9 et 10 en opposition avec le composé 23 col. 20). Le document FR-A-2 281 936 décrit également des structures de type amide mais différentes telles que les phényl hydrazides à groupe amino méthyl phosohonique.

Un but de la présente invention est, par ailleurs, de fournir des herbicides ayant une activité forte et rapide.

Un autre but de la présente invention est de fournir des herbicides à faible rémanence et facilement biodégradables.

Un autre but de la présente invention est de fournir des herbicides de post-émergence, à large spectre d'activité, à systémie descendante, éventuellement sélectifs de certaines cultures.

Un autre but de l'invention est de fournir des produits intermédiaires et des procédés permettant l'accès aux herbicides à groupe aminométhylphosphonique.

Un autre but de l'invention est de fournir un procédé très simple et amélioré de préparation d'herbicides et mettant en oeuvre des réactifs peu élaborés, notamment la glycine et ses dérivés simples.

D'autres buts et avantages de l'invention apparaitront au cours de la description qui va suivre.

Il a maintenant été trouvé que ces buts pouvaient être atteints, en tout ou partie, grâce aux composés selon l'invention.

Les composés selon l'invention, utilisables notamment soit comme herbicides soit comme intermédiaires chimiques, sont des produits de formule:

$$O = \underset{\underset{OR^3}{|}}{\overset{\overset{OR^2}{|}}{P}} - CH_2 - \overset{\overset{R^4}{|}}{N} - CH_2 - CO - \underset{\underset{R}{|}}{N} - SO_2 - R^1 \quad (I)$$

dans laquelle:

- $R^1$ représente un radical alkyle de 1 à 18 atomes de carbone, aryle de 6 à 18 atomes de carbone, cycloalkyle de 3 à 18 atomes de carbone, les dits radicaux étant éventuellement substitués par les atomes d'halogène, les groupes phényle cyano, alkyle, alkoxyle, carboxylate d'alkyle dans lesquels les groupes alkyle ont 1 à 4 atomes de carbone;
- R représente l'atome d'hydrogène, ou a l'une des significations données pour $R^1$;
- $R^2$, $R^3$ représentent un atome d'hydrogène ou sont un radical alkyle de 1 à 12 atomes de carbone, de préférence 1 à 8 atomes de carbone, un radical aryle de 6 à 12 atomes de carbone, les dits radicaux étant éventuellement substitués par des substituants tels que ceux indiqués pour $R^1$;
- $R^4$ représente un atome d'hydrogène ou un radical $Ar-C(R^5)(R^6)-$ dans laquelle Ar est un groupe aromatique, de préférence phényle, er $R^5$ et $R^6$ sont l'atome d'hydrogène ou un radical Ar ou un groupe alkyle ayant au plus 6 atomes de carbone;

ainsi que les sels de ces divers produits (notamment les sels des groupes P-OH et ceux de l'atome d'azote porteurs du group $Ar-C(R^5)(R^6)-$ qui devient alors un groupe ammonium) et en particulier les sels acceptables en agriculture de ces produits. Les sels acceptables en agriculture incluent les sels de métaux alcalins, notamment de sodium et de potassium, les sels de métaux alcalino-terreux, les sels d'ammonium primaires, secondaires, tertiaires ou quaternaires, les sels de sulfonium. D'autres sels de l'invention sont les sels d'addition avec un acide comme les chlorures, sulfates, phosphates et autres sels dérivés d'acides ayant un pk inférieur ou égal à 2,5.

Parmi les divers produits selon l'invention, une sous-famille, particulièrement intéressante par l'activite

herbicide des produits qui la constituent, comprend les produits de formule dans la formule (I) desquels:

- $R^2$, $R^3$ et $R^4$ sont l'atome d'hydrogène,
- R et $R^1$ sont des radicaux alkyle éventuellement substitués (notamment halogénés) et ayant de 1 à 4 atomes de carbone (de préférence méthyle), ainsi que les sels acceptables en agriculture de ces produits.

L'invention porte également sur des produits intermédiaires de formule:

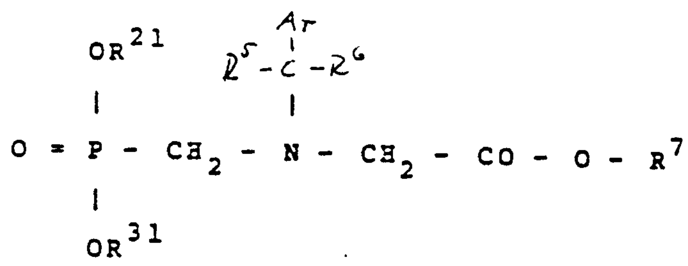
(II)

dans laquelle

- $R^{21}$ et $R^{31}$ ont les significations déjà indiquées dans la formule (I) pour $R^2$ et $R^3$ sauf l'atome d'hydrogène, $R^{21}$ et $R^{31}$ étant de préférence des radicaux alkyle,
- Ar, $R^5$, $R^6$ ont la signification déjà indiquée pour la formule (I),
- $R^7$ a la même signification que celle indiquée pour $R^{21}$ et $R^{31}$.

Dans les diverses formules précédentes, Ar représente un groupe aromatique, de préférence aryle et plus spécialement phényle; ce radical Ar peut, si la chose est désirée, porter un ou plusieurs substituants qui ne nuisent pas aux réactions intervenant dans le procédé (alkyle, alkoxyle, nitro, halogenes et autres, le nombre d'atomes de carbone étant de préférence au plus égal à 6), cependant il n'apparaît pas d'avantage particulier à utiliser de tels substituants.

Comme radicaux Ar-C($R^5$)($R^6$)- on peut citer les radicaux benzyle, 1-phényléthyle, 1-phénylpropyle, naphthylméthyle, 1-naphthyléthyle, 1-naphthylpropyle, diphénylmethyle, trityle (= triphénylméthyle).

Dans le présent exposé les composés chimiques sont désignés par leur nomenclature française mais la numérotation de la position des substituants est placée avant le nom des substituants selon la nomenclature anglosaxonne, et non pas après selon la nomenclature française.

Les produits de formule (I) dans lesquels R est autre que l'atome d'hydrogène, se préparent le plus commodément à partir de produits de formule:

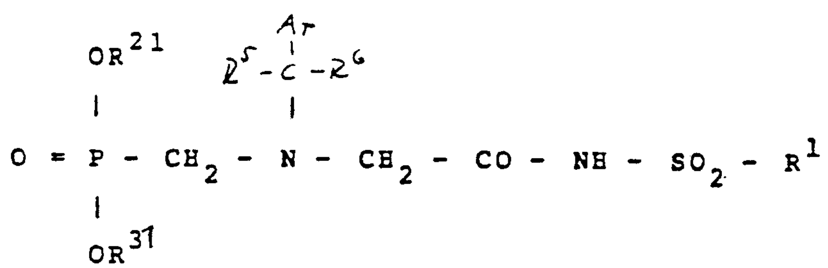
(III)

par réaction avec un ester de formule X - R°, R° ayant la signification donnée pour R dans la formule (I) sauf l'hydrogène et XH étant un acide protonique (minéral ou organique), de préférence un acide minéral fort; X est avantageusement un atome de chlore, brome ou iode ou un groupe sulfate. De préférence X - R° est un halogénure d'alkyle. Cette réaction s'opère avantageusement dans un solvant, en présence d'un agent alcalin à température comprise entre -10 et +100°C.

Les produits de formule (III), se préparent généralement par réaction de produits de formule (II) dans laquelle $R^7$ est remplacé par H, avec un sulfonyl isothiocyanate de formule

$R^1-SO_2-N=C=S$,

de préférence dans un solvant et en présence d'un agent alcalin, de préférence une amine tertiaire. La réaction s'effectue avantageusement entre 10 et 120°C.

Les produits de formule (II) dans lesquels $R^{21}$, $R^{31}$, Ar, $R^5$ et $R^6$ sont tels que définis précédemment et $R^7$ est remplacé par H se préparent généralement par hydrolyse de produits de formule (II). Cette hydrolyse est, en pratique, une saponification mettant généralement en oeuvre une quantité molaire d'agent alcalin sensiblememt égale à la quantité molaire de produit de formule (II).

Les produits de formule (II) selon un autre aspect de l'invention, se préparent commodément par réaction de phosphite (ou ester phosphonique) de formule:

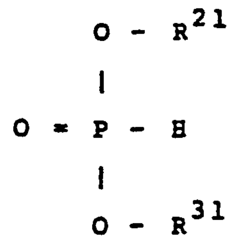

(IV)

avec du formaldéhyde et un dérivé N-substitué de la glycine, le substituant sur l'atome d'azote étant un substituant hydrogénolysable; ce dérivé N-substitué de la glycine est en pratique un composé de formule

$AR-C(R^5)(R^6)-NH-CH_2-CO-O-R^7$,

AR, $R^5$, $R^6$ et $R^7$ ayant même signification que précédemment.

La réaction s'effectue généralement entre 0 et 100°C, de préférence entre 20 et 90°C par simple mélange de réactifs. Bien qu'un large excès (3/1 à 1/3 en rapports molaires) de l'an des réactifs par rapport à un autre soit possible, il est plus avantageux en pratique de se rapprocher le plus possible de la stoechiométrie et de ne pas s'écarter de plus de 20 % en mole de cette stoechiométrie. C'est même un des avantages important de l'invention de ne pas nécessiter d'excès d'un des réactifs par rapport aux autres. Un autre avantage de l'invention réside dans les bons rendements obtenus dans la préparation des composés de formule (II).

Le formaldéhyde est utilisé sous l'une ou l'autre forme commodément accessible. Selon une modalité la plus courante il est utilisé sous forme de solution aqueuse de concentration comprise entre 1 % et la saturation, de préférence de 30 à 40 %.

La réaction peut être effectuée en présence d'un solvant inerte mais généralement un tel solvant est inutile et c'est même un autre avantage de l'invention de ne pas nécessiter de solvant pour la préparation des composés de formule (II) (excepté l'eau du formol selon la modalité préférée).

Le produit de réaction est isolé par tout moyen connu en soi. Les produits selon l'invention de formule:

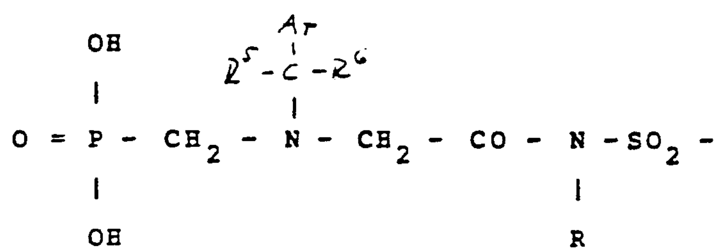

(V)

se préparent le plus commodément par déalkylation (ou transestérification) des produits de formule (I) dans laquelle $R^2$ et $R^3$ sont autres que l'atome d'hydrogène. Cette déalkylation se fait avantageusement par action d'un hydracide (ou acide halohydrique) en milieu solvant organique polaire protique, comme par exemple les acides carboxyliques aliphatiques inférieurs.

Les produits de formule:

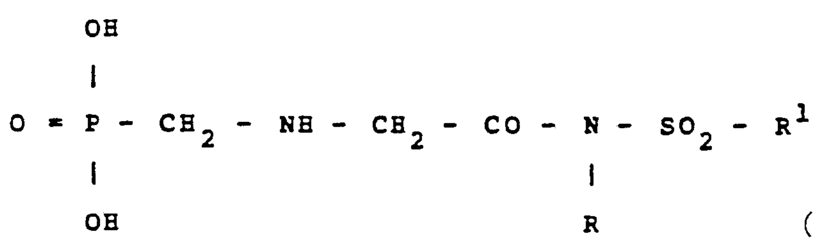

(VI)

se préparent le plus commodément par hydrogénolyse du groupement $Ar-C(R^5)(R^6)-$ des produits de formule (V).

C'est le plus couramment une débenzylation. On opère avantageusement en milieu aqueux ou alcoolique à température ambiante ou supérieure, à pression atmosphérique ou supérieure. Comme catalyseur on peut utiliser lés catalyseurs habituels d'hydrogénolyse des radicaux $Ar-C(R^5)(R^6)-$ considérés. Comme catalyseurs appropriés on peut citer le palladium, le platine, le nickel Raney. Ce catalyseur peut être utilisé avec ou sans support inerte. On peut aussi utiliser les métaux précités, spécialement le palladium et le platine sous forme de sels, d'hydroxydes, ou d'oxydes, lesquels se transforment en métal correspondant sous l'action de l'hydrogène. Comme catalyseur de débenzylation préféré, on utilise les catalyseurs à base de palladium comme le palladium sur charbon ou le palladium sur sulfate de baryum, ou l'hydroxyde de palladium sur charbon. En fin de reaction, on peut séparer le catalyseur par filtration et évaporer le filtrat on obtient ainsi du

produit de formule (V) pratiquement pur. Un avantage important de l'invention réside dans le fait du temps de réaction relativement court pour cette débenzylation, ce qui permet d'utiliser des quantités réduites de catalyseur.

Dans la formule (VI) et dans d'autres composés de l'invention, les groupes alkyle représentés par R et $R^1$ contiennent de preférence de 1 à 6 atomes de carbone et les groupes cycloalkyle, ou aryle représentés par R et $R^1$ ont de préférence au plus 10 atomes de carbone. Les composés de formule (VI) dans laquelle R est R° (autre que l'atome d'hydrogène) sont préférés. Les composés préférés sont les composés de formule générale (VI) dans laquelle R et $R^1$ (identiques ou différents), représentent un groupe alkyle de 1 à 4 atomes de carbone, $R^1$ étant éventuellement chloré ou fluoré. Les sels acceptables en agriculture de ces composés font aussi partie des composés préférés.

Un autre procédé de préparation de produits de formule (I) dans lesquels R, $R^2$, $R^3$ et $R^4$ sont autres que l'atome d'hydrogène, c'est-à-dire des composés de formule:

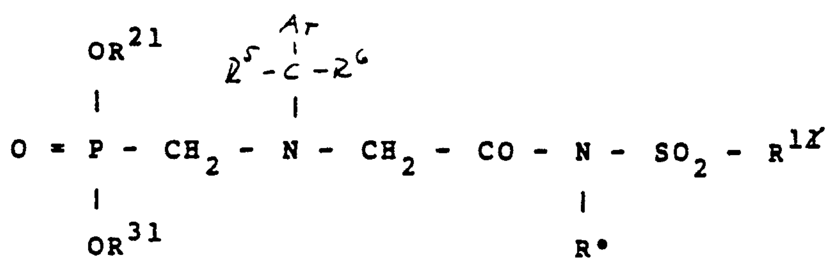

dans laquelle

R° est tel que défini pour R mais n'est pas H,

$R^1$, $R^{21}$, $R^{31}$, Ar, $R^5$, $R^6$ sont tels que définis précédemment,

consiste à faire réagir un sulfonamide de formule

$R°-NH-SO_2-R^1$

avec un anhydride mixte de formule :

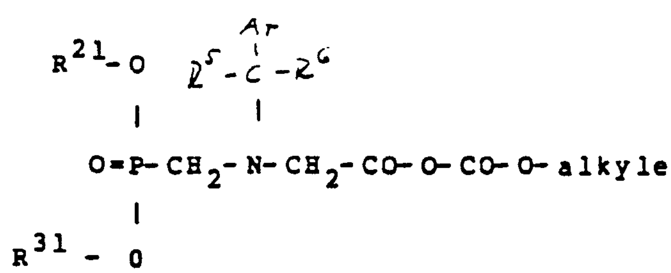

(VII)

lui-même obtenu par réaction d'un produit de formule:

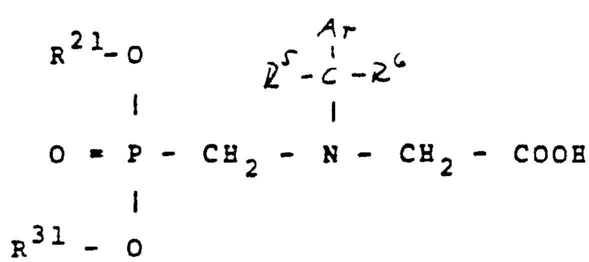

(VIII)

(de préférence sous forme salifiée) avec un chloroformiate d'alkyle (Cl-CO-O-alkyle; alkyle a de préférence 1 à 4 atomes de carbone). Le produit de formule (VIII) est avantageusement utilisé sous forme de sel d'ammonium et spécialement sous forme de sel d'amine tertiaire, telle que la triéthylamine. La réaction s'effectue avantageusement à température comprise entre -30 et +10°C en présence de solvant; si on utilise un solvant dans lequel les sels formés en cours de réaction sont insolubles, il suffit alors de séparer le produit de réaction par filtration. C'est ainsi qu'on peut utiliser comme solvants des éthers et des esters, notamment le tétrahydrofuranne et l'acétate d'éthyle.

Le produit de formule (VIII) peut être préparé par hydrolyse de produit de formule (II), de préférence en présence d'agent alcalin en quantité au moins voisine de la stoechiométrie.

La réaction de l'anhydride mixte de formule (VII) avec le sulfonamide $R^1-SO_2-NH-R°$ s'effectue

avantageusement en milieu biphasique eau/solvant organique en présence d'un agent alcalin et d'un catalyseur de transfert de phase. La température est généralement comprise entre 0 et 50°C. Comme catalyseurs de transfert de phase (utilisé généralement à raison de 0,1 à 10 % en poids rar rapport à l'anhydride mixte) on peut citer les sels d'ammonium quaternaire et d'acide fort tels que les halogénures ou sulfates de tétraalkyl ammonium ou trialkyl aralkylammonium. Comme agent alcalin on utilise avantageusement un hydroxyde ou carbonate alcalin ou alcalino-terreux ou d'ammonium, de préférence un hydroxyde alcalin. Comme solvant organique on utilise un solvant organique non miscible à l'eau, par exemple $CH_2Cl_2$.

Comme il a été indiqué plus haut, les composés selon l'invention, spécialement ceux de formule (I) peuvent être sous forme de sels acceptables en agriculture. C'est ainsi que des sels peuvent éventuellement se former ou être formés avec les constituants des compositions ou formulations contenant la matière active selon l'invention et qui sont utilisés pratiquement et dont la nature sera décrite plus loin.

Les exemples suivants, donnés à titre non limitatif illustrent l'invention et montrent comment elle peut être mise en oeuvre.

Les exemples 1 à 11 illustrent la synthèse et les propriétés physiques de composés herbicides et intermédiaires chimiques selon l'invention. Les points de fusion indiqués correspondent en général à un phénomène de fusion avec décomposition. Lorsque des caractéristiques spectrales sont indiquées, il s'agit soit de bandes d'absorption infra-rouge (IR) exprimées en $cm^{-1}$, soit de déplacement chimiques du proton en résonnance magnétique nucléaire (RMN); dans ce dernier cas les déplacements sont exprimés en ppm (parties par million) et les mesures sont effectuées dans le chloroforme deutéré en présence de tétraméthylsilane comme référence.

L'exemple 12 illustre l'application en postlevée de produits selon l'invention (les termes postlevée et postémergence sont synonymes).

**Exemple 1:**

On utilise comme réactif de départ la N-benzyl-N-(diéthylphosphonométhyl)glycine de formule:

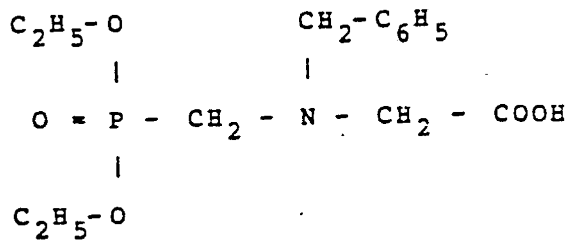

(IX)

et dont la préparation est décrite à l'exemple 7.

56,3 g de produit de formule (IX) sont dissous dans 200 ml d'acétonitrile. On ajoute 0,1 ml de triéthylamine et coule goutte à goutte 24,5 g de méthyl sulfonylisothiocyanate ($CH_3$-$SO_2$-NCS). Le COS qui se dégage est piégé dans une solution méthanolique de soude. La température s'élève de 20 à 35°C. Après addition, on chauffe 1 heure à l'ébullition à reflux, puis concentre sous vide.

On obtient 70,5 g de produit huileux de formule:

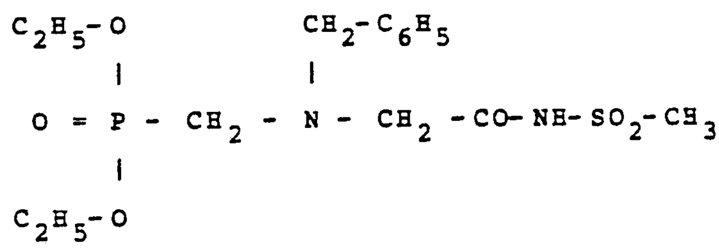

(X)

**Exemple 2:**

23,5 g de produit de formule (X) sont dissous dans 100 ml de diméthylformamide. Dans le réacteur maintenu à 25°C en atmosphère d'azote, on ajoute 1,8 g d'hydrure de sodium (pureté 80 %). Après addition on laisse réagir 30 minutes à 20°C puis on ajoute 9,9 g d'iodure de méthyle. La température s'élève de 21 à 24 C. On chauffe à 70° pendant 1/2 heure. On évapore le solvant, ajoute 200 ml de $CH_2Cl_2$, lave à l'eau carbonatée puis à l'eau; on sèche et concentre. On obtient 16 g de produit huileux de formule:

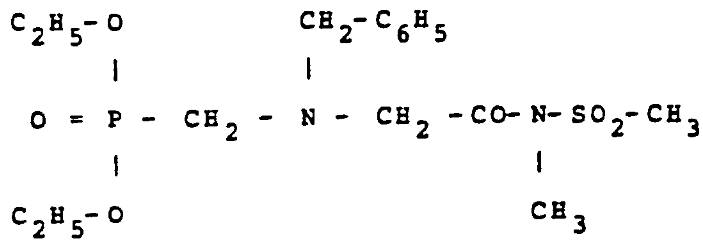 (XI)

**Exemple 3:**

50 g d'HBr anhydre sont dissous à 15°C dans 100 ml d'acide acétique et l'on maintient la température à l'aide d'un bain d'eau glacée. On ajoute une solution contenant 45 g de produit de formule (XII) et 45 ml d'acide acétique. On laisse réagir 30 heures à 20°C. On concentre, dissout dans du méthanol, précipite à l'aide d'oxyde de propylène, filtre et lave à l'aide de méthanol puis sâche. On obtient 36 g (rendement 93 %) de produit de formule:

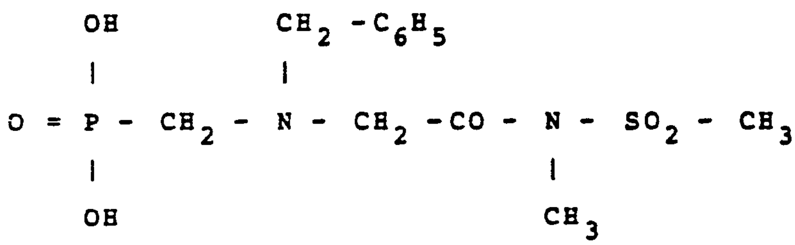 (XII)

Ce produit est une poudre blanche fondant à 205°C.

**Exemple 4:**

On mélange 1 g de catalyseur de palladium, déposé sur noir de carbone (10 % de Pd) avec 20 ml d'HCl concentré et 150 ml de méthanol. On dissout 8,4 g de produit de formule (XII). On fait passer un courant d'hydrogène qu'on arrête lorsque la température est redescendue de 24 à 21°C. On filtre, concentre le filtrat. Le concentrat est dissous dans 50 ml de méthanol. On ajoute 2 ml d'oxyde de propylène qui produit un relargage. Le précipité est filtré, lavé à l'acétone; on obtient 4,8 g de produit de formule:

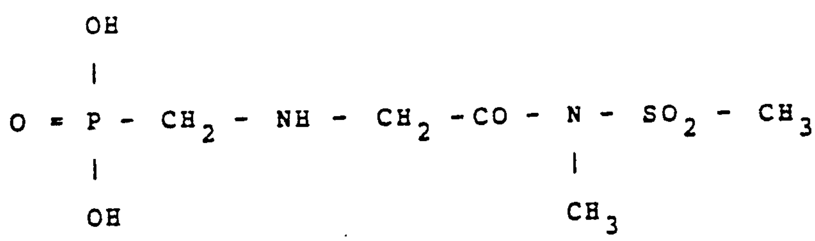 (XIII)

**Exemple 5:**

Dans un mélange de 2830 g (14,66 moles) de N-benzyl glycinate d'éthyle et de 2028 g (14,17 moles) de diéthylphosphite [$(C_2H_5O)_2P(O)H$], on coule, sous agitation, à température ambiante, en 1 h 30 mn, 1466 g d'une solution aqueuse de formaldéhyde à 30 % en poids (14,66 moles). La température s'élève jusqu'à 41°C en cours de coulée. On chauffe à 90°C pendant 1h 30 mn, puis refroidit.

Pour extraire le produit de réaction on ajoute 7 l de $CH_2Cl_2$, et lave 3 fois avec 6 l d'eau chaque fois. On élimine le solvant. On obtient ainsi 4647 g d'une huile brun clair d'indice de réfraction $n^{20}_D$ = 1,491 Le rendement est de 92,4 %. Le produit obtenu a pour formule:

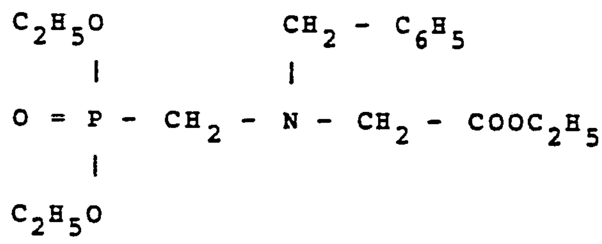 (XIV)

**Exemple 6:**

On opère comme à l'exemple 5 mais en remplaçant le phosphite de diéthyle par du phosphite de diméthyle (également appelé phosphonate de méthyle) de formule $(CH_3O)_2P(O)H$.

On obtient, avec un rendement de 87 %, le produit de formule:

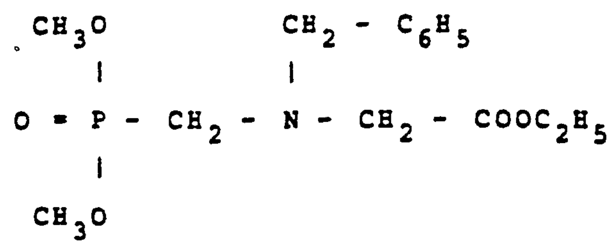 (XV)

d'indice de réfraction $n^{20}_D = 1,499$

**Exemple 7:**

On coule à 40°C, en 1h 1/2, 6,8 l d'une solution aqueuse à 5 % en poids d'hydroxyde de sodium sur 2915 g de composé de formule (XIV). On chauffe alors 1h 1/2 à 80°C, refroidit, lave avec 4 l de $CH_2Cl_2$. On acidifie la solution aqueuse jusqu'à pH = 2 avec 800 ml d'acide chlorhydrique 10N. Le produit se sépare de la couche aqueuse sous forme d'huile qu'on extrait avec 5 l de $CH_2Cl_2$. La solution chlorométhylènique est lavée 2 fois avec 2,5 l d'eau chaque fois. On évapore à sec et obtient ainsi 2012 g (rendement: 75 %) de produit de formule (IX) qui cristallise au stockage (point de fusion: 37°C).

**Exemple 8:**

On opère comme à l'exemple 7 en utilisant comme réactif de départ le produit de formule (XV) au lieu du composé de formule (XIV). On obtient ainsi avec un rendement de 36 % le produit de formule:

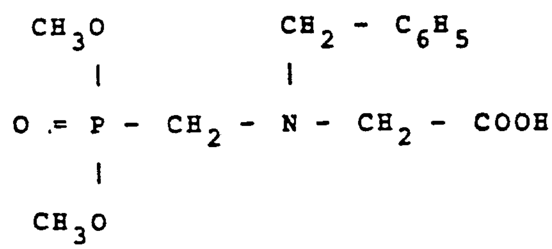 (XVI)

qui fond à 73,8°C.

**Exemple 9:**

Dans 600 ml de tétrahydrofurane anhydre on dissout 189 g de N-benzyl-N-(diéthylphosphonométhyl) glycine de formule (X). Dans cette première solution on verse progressivement et à température ambiante 60,6 g de

triéthylamine. Au bout de 15 mn on refroidit de la température ambiante jusqu'à -10°C et on verse progressivement dans le milieu en 20 mn 66 g de chloroformiate d'éthyle. On laisse alors la température remonter à +10°C puis on filtre; le précipité est lavé avec du tétrahydrofurane. L'ensemble des filtrats est évaporé. On obtient ainsi 225 g de produit de formule:

```
C2H5 - O          CH2 - C6H5
       |          |
   O = P - CH2 - N - CH2 - CO - O - CO - O - C2H5
       |
C2H5 - O                                   (XVII)
```

Cet anhydride mixte est dissout dans 500 ml de $CH_2Cl_2$. On ajoute 3 g de chlorure de triéthylbenzylammonium et 72 g de N-méthyl méthane sulfonamide. On refroidit à +10°C. On ajoute alors, goutte à goutte, 51 g de solution aqueuse à 50 % en poids d'hydroxyde de sodium. On poursuit l'agitation pendant 1 h à 20°C; on ajoute 300 ml d'eau. Après agitation on décante; la phase organique est lavée à l'eau, séchée, concentrée. On obtient 202 g (rendement 83 %) de produit huileux de formule (XI) et d'indice de réfraction $n^{22}_D = 1,507$

En opérant selon les exemples 3, 4 et 11 et en utilisant les réactifs adéquats, on prépare les différents composés de formule (I) indiqués au tableau (I).

**Exemples 10:**

Application herbicide, en postlevée des espèces végétales

Dans des pots de 9 x 9 x 9 cm remplis de terre agricole légère, on sème un nombre de graines déterminé en fonction de l'espèce végétale et de la grosseur de la graine.

On recouvre ensuite les graines d'une couche de terre d'environ 3 mm d'épaisseur et on laisse germer la graine jusqu'à ce qu'elle donne naissance à une plantule au stade convenable. Le stade de traitement pour les graminées est le stade "deuxième feuille en formation". Le stade de traitement pour les dicotylédones, est le stade "cotylédons étalés, première feuille vraie en développement".

Les pots sont alors traités par pulvérisation de bouillie en quantité correspondant à une dose volumique d'application de 500 l/ha et contenant la matière active à la concentration désirée.

La bouillie utilisée pour le traitement est une suspension ou solution aqueuse de la matière active contenant 0,1 % en poids de Cémulsol NP 10 (agent tensio-actif constitué d'alkylphénol polyéthoxylé, notamment de nonylphénolpolyéthoxylé) et 0,04 % en poids de tween 20 (agent tensio-actif constitué d'un oléate de dérivé polyoxyéthylèné du sorbitol).

La matière active a été appliquée à la dose de 4 kg/ha.

Les pots traités sont ensuite placés dans des bacs destinés à recevoir l'eau d'arrosage, en subirrigation, et maintenus pendant 28 jours à température ambiante sous 70 % d'humidité relative.

Au bout de 28 jours, on compte le nombre de plantes vivantes dans les pots traités par la bouillie contenant la matière active à tester et le nombre de plantes vivantes dans un pot témoin traité selon les mêmes conditions, mais au moyen d'une bouillie ne contenant pas de matière active. On détermine ainsi le pourcentage de destruction des plantes traitées par rapport au témoin non traité. Un pourcentage de destruction égal à 100 % indique qu'il y a eu destruction complète de l'espèce végétale considérée et un pourcentage de 0 % indique que le nombre de plantes vivantes dans le pot traité est identique à celui dans le pot témoin.

Les plantes utilisées dans les tests sont:

| Abréviations | Nom français | Nom latin |
|---|---|---|
| P | Panisse | echinochloa crus-galli |
| RG | ray-grass | lolium multiflorum |
| HAR | haricot | phaseolus vulgaris |
| MOU | moutarde | sinapis alba |
| CHE | chenopode | chenopodium album |

Les résultats obtenus sont présentés au tableau (II):

Les composés illustrés au tableau (II) ont aussi été utilisés à la dose de 1 kg/ha et ont présenté une bonne activité à cette dose nettement inférieure; ils présentent aussi une bonne activité sur un grand nombre de plantes aussi diverses que celles indiquées au tableau (III).

Les essais réalisés montrent donc les propriétés remarquablement avantageuses des composés selon

l'invention, en tant que herbicides à large spectre d'activité et actifs en postémergence; ces produits sont généralement inactifs en préemergence.

Pour leur emploi pratique, les composés selon l'invention sont rarement utilisés seuls. Le plus souvent ces composés font partie de compositions. Ces compositions, utilisables comme agents herbicides, contiennent comme matière active un composé selon l'invention tel que décrit précédemment (composé de formule (I), dans laquelle, de manière préférentiel $R^2$, $R^3$ et $R^4$ sont H et R est R°, autre que H, ou un sel d'un tel composé) en association avec les supports solides ou liquides, acceptables en agriculture et/ou les agents tensio-actifs également acceptables en agriculture. En particulier sont utilisables les supports inertes et usuels et les agents tensio-actifs usuels. Ces compositions font également partie de l'invention.

Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des sequestrants, etc... ainsi que d'autres matières actives connues à propriétés pesticides (notamment imsecticides, fongicides ou herbicides) ou à propriétés régulatrices de la croissance des plantes. Plus généralement les composés utilisés dans l'invention peuvent être associés à tous les additifs solides ou liquides correspondant aux techniques habituelles de la mise en formulation. Des compositions comprenant 0,1 à 7 % de sel d'ammonium, notamment le sulfate, et de préférence 0,5 à 5 %, sont particulièrement avantageuses.

Les doses d'emploi des composés utilisés dans l'invention peuvent varier dans de larges limites, notamment selon la nature des adventices à éliminer et le degré d'infestation habituel des cultures pour ces adventices.

D'une façon générale, les compositions selon l'invention contiennent habituellement de 0,05 à 95 % environ (en poids) d'une ou plusieurs matières actives selon l'invention, de 1 % à 95 % environ de un ou plusieurs supports solides ou liquides et éventuellememt de 0,1 à 50 % environ de un ou plusieurs agents tensioactifs.

Selon ce qui a déjà été dit les composés utilisés dans l'invention sont généralement associés à des supports et éventuellement des agents tensioactifs.

Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau; alcools, notamment le butanol; esters, notamment l'acétate de méthyl-glycol; cetones, notamment la cyclohexanone et l'isophorone; fractions de pétrole; hydrocarbures aromatiques, notamment les xylènes, ou paraffiniques; hydrocarbures chlorés aliphatiques, notamment ie trichloroéthane, ou aromatiques, notamment les chlorobenzènes; des solvants hydrosolubles tels que le diméthylformamide, le diméthylsulfoxyde, la N-méthyl-pyrrolidone; gaz liquéfiés, etc..).

L'agent tensioactif peut être un agent émulsionnant, dispersant ou mouillant de type ionique ou non ionique ou un mélange de tels agents tensioactifs. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés, des esters d'acides gras et de polyols, les dérivés à fonction sulfates, sulfonates et phosphates des composés précédents. La prêsence d'au moins un agent tensioactif est généralement indispensable lorsque la matière active et/ou le support inerte ne sont pas ou peu solubles dans l'eau et que l'agent vecteur de l'application est l'eau.

Pour leur application, les composés de formule (I) se trouvent donc généralement sous forme de compositions; ces compositions selon l'invention sont elles-mêmes sous des formes assez diverses, solides ou liquides.

Comme formes de compositions solides, on peut citer les poudres pour poudrage (à teneur en composé de formule (I) pouvant aller jusqu'à 80 %) et les granulés, notamment ceux obtenus par extrusion, par compactage, par imprégnation d'un support granulé, par granulation à partir d'une poudre (la teneur en composé de formule (I) dans ces granulés étant entre 0,5 et 80 % pour ces derniers cas).

Comme formes de compositions liquides ou destinées à constituer des compositions liquides lors de l'application, on peut citer les solutions, en particulier les concentrés émulsionnables, les émulsions, les suspensions concentrées, les aérosols, les poudres mouillables (ou poudre à pulvériser), les granulés autodispersibles et les pâtes.

Les concentrés émulsionnables ou solubles comprennent également le plus souvent 5 à 80 % de matière active, les émulsions ou solutions prêtes à l'application contenant, quant à elles, 0,01 à 20 % de matière active. En plus du solvant, les concentrés émulsionnables peuvent contenir, quand c'est nécessaire, 2 à 50 % d'additifs appropriés, comme des stabilisants, des agents tensioactifs, des agents de pénétration, des inhibiteurs de corrosion, des colorants, des adhésifs.

A partir de ces concentrés, on peut obtenir par dilution avec de l'eau des émulsions de toute concentration désirée, qui conviennent particulièrement à l'application sur les végétaux.

A titre d'exemple, voici la composition de quelques concentrés émulsionnables:

**Exemple 11:**

| | |
|---|---|
| - matière active | 100 g |
| - alkyl phénol polyéthoxylé | 100 g |
| - éther méthylique de l'éthylène glycol | 400 g |
| - coupe pétrolière aromatique distillant entre 160 - 185°C | 400 g |

**Exemple 12:**

Selon une autre formule de concentré émulsionnable, on utilise:

| | |
|---|---|
| - matière active | 50 g |
| - huile végétale époxydée | 25 g |
| - mélange de sulfonate d'alcoylaryle et d'éther de polyglycol et d'alcools gras | 100 g |
| - diméthylformamide | 250 g |
| - xylène | 575 g |

Les suspensions concentrées, qui sont applicables en pulvérisation, sont préparées de manière à obtenir un produit fluide stable ne se déposant pas (broyage fin) et elles contiennent habituellement de 10 à 75 % de matière active, de 0,5 à 30 % d'agents tensioactifs, de 0,1 à 10 % d'agents thixotropes, de 0 à 30 % d'additifs appropriés, comme des anti-mousses, des inhibiteurs de corrosion, des stabilisants, des agents de pénétration et des adhésifs et, comme support, de l'eau ou un liquide organique dans lequel la matière active est peu soluble ou non soluble:

certaines matières solides organiques ou des sels minéraux peuvent être dissous dans le support pour aider à empêcher la sédimentation ou comme antigels pour l'eau.

A titre d'exemple, voici une composition de suspension concentrée:

**Exemple 13:**

| | |
|---|---|
| - matière active | 500 g |
| - phosphate de tristyrylphénol polyéthoxylé | 50 g |
| - alkylphénol polyéthoxylé | 50 g |
| - polycarboxylate de sodium | 20 g |
| - éthylène glycol | 50 g |
| - huile organopolysiloxanique (antimousse) | 1 g |
| - polysaccharide | 1,5 g |
| - eau | 316,5 g |

Les poudres mouillables (ou poudre à pulvériser) sont habituellement préparées de manière qu'elles contiennent 10 à 80 % de matière active, et elles contiennent habituellement, en plus du support solide, de 0 à 5 % d'un agent mouillant, de 3 à 10 % d'un agent dispersant, et, quand c'est nécessaire, de 0 à 80 % d'un ou plusieurs stabilisants et/ou autres additifs, comme des agents de penetration, des adhesifs, ou des agents antimottants, colorants, etc..

A titre d'exemple, voici diverses compositions de poudres mouillables:

**Exemple 14:**

| | |
|---|---|
| - matière active | 50 % |
| - lignosulfonate de calcium (défloculant) | 5 % |
| - isopropylnaphtalène sulfonate (agent mouillant anionique) | 1 % |
| - silice antimottante | 5 % |
| - kaolin (charge) | 39 % |

**Exemple 15:**

Un autre exemple de poudre mouillable à 25 % est donné ci-après:

| | |
|---|---|
| - matière active | 25 % |
| - amine aliphatique ($C_{10}$ à $C_{18}$) polyéthoxylée | 10 % |
| - alcool aliphatique ($C_8$-$C_{18}$) polyéthoxylée | 10 % |
| - silice antimottante | 25 % |
| - kaolin | 30 % |

**Exemple 16:**

Un autre exemple de poudre mouillable est donné ci-après:

| | |
|---|---|
| - matière active | 50 % |
| - alkylnaphtalène sulfonate de sodium | 2 % |
| - méthyl cellulose de faible viscosité | 2 % |
| - terre de diatomées | 46 % |

**Example 19:**

Un autre exemple de poudre mouillabie est donné ci-après:

| | |
|---|---|
| - matière active | 90 % |
| - dioctylsulfosuccinate de sodium | 0,2 % |
| - silice synthétique | 9,8 % |

**Exemple 20:**

Une autre composition de poudre mouillable à 40 % utilise les constituants suivants :

| | |
|---|---|
| - matière active | 400 g |
| - lignosulfonate de sodium | 50 g |
| - dibutylnaphtalène sulfonate de sodium | 10 g |
| - silice | 540 g |

**Exemple 19:**

Une autre composition de poudre mouillable à 25 % utilise les constituants suivants:

| | |
|---|---|
| - matière active | 250 g |
| - isooctylphénoxy-polyoxyéthylène-éthanol | 25 g |
| - mélange équipondéral de craie de Champagne et d'hydroxyéthylcellulose | 17 g |
| - aluminosilicate de sodium | 543 g |
| - kieselguhr | 165 g |

**Exemple 22:**

Une autre composition de poudre mouillable à 10 % utilise les constituants suivants:

| | |
|---|---|
| - matière active | 100 g |
| - mélange de sels de sodium de sulfates d'acides gras saturés | 30 g |
| - produit de condensation d'acide naphtalène | |

| | |
|---|---|
| sulfonique et de formaldéhyde | 50 g |
| - kaolin | 820 g |

Pour obtenir ces poudres mouillables, on mélange intimement la ou les matières actives dans des mélangeurs appropriés avec les substances additionnelles éventuellement imprégnées sur la charge poreuse et on broie avec des moulins ou autres broyeurs appropriés. On obtient par là des poudres mouillable dont la mouillabilité et la mise en suspension sont avantageuses; on peut les mettre en suspension avec de l'eau à toute concentration désirée et cette suspension est utilisable très avantageusement en particulier pour l'application sur les feuilles de végétaux.

Les granulés "autodispersibles" (en langue anglaise "water dispersible granuls (WG)"; il s'agit plus exactememt de granules facilement dispersibles dans l'eau) ont une composition sensiblement voisine de celle des poudres mouillables. Ils peuvent être préparés par granulation de formulations décrites pour les poudres mouillables, soit par voie humide (mise en contact de la matière active finement divisée avec la charge inerte et avec un peu d'eau, par exemple 1 à 20 %, ou de solution aqueuse de dispersant ou de liant, puis séchage et tamisage), soit par voie sèche (compactage puis broyage et tamisage).

A titre d'exemple, voici une formulation de granulé autodispersible:

**Exemple 21:**

| | |
|---|---|
| - matière active | 800 g |
| - alkylnaphtalène sulfonate de sodium | 20 g |
| - méthylène bis naphtalène sulfonate de sodium | 80 g |
| - kaolin | 100 g |

Comme cela a déjà été dit, les dispersions et émulsions aqueuses, par exemple des compositions obtenues en diluant à l'aide d'eau une poudre mouillable ou un concentré émulsionnable selon l'invention, sont comprises dans le cadre général des compositions utilisables dans la présente inventiom. Les émulsions peuvent être du type eau-dans-l'huile ou huile-dans-l'eau et elles peuvemt avoir une consistance épaisse comme celle d'une "mayonnaise".

Toutes ces dispersions ou émulsions aqueuses ou bouillies sont applicables aux cultures à désherber par tout moyen convenable, principalement par pulvérisation, à des doses qui sont généralement de l'ordre de 100 à 1 200 litres de bouillie à l'hectare.

La présente invention concerne aussi un procédé de désherbage qui consiste à appliquer aux plantes devant être détruites une quantité efficace d'un composé de formule (I) dans lequel $R^2$, $R^3$ et $R^4$ sont H et R est de préférence R°, autre que H.

Les produits et compositions selon l'invention s'appliquent commodément sur la végétation et notamment sur les mauvaises herbes à éliminer lorsque celles-ci présentent un feuillage vert. Leur rémanence étant faible on peut opérer de manière à ce que la culture soit semée avant ou après traitement mais émerge peu après traitement (2 à 3 semaines) c'est à dire après la dégradation des produits de l'invention.

La dose d'application de matière active est généralememt comprise entre 0,1 et 10 kg/ha, de préférence entre 0,5 et 8 kg/ha.

Les divers additifs ou adjuvants mentionnés plus haut ont généralement comme rôle principal de faciliter la manipulation et l'épandage des produits selon l'invention. Dans certains cas, ils peuvent aussi avoir un rôle de pénétration de la matière active dans la plante et, par là, ils peuvent augmenter l'activité normale des matières actives selon l'invention.

Les compositions herbicides et leur application peuvent aussi être mises en oeuvre peu avant la récolte de manière à tuer les mauvaises herbes dont les racines subsistent dans le sol après la récolte. On peut ainsi semer tres rapidement après la récolte sans qu'il soit nécessaire d'effectuer des opérations mécaniques de désherbage (labourage ou autre).

**Tableau (I)**

| composé n° | R | $R^1$ | $R^2$ et $R^3$ | $R^4$ | caractéristiques physiques: point de fusion en °C | indice de réfraction $n^{20}_D$ | autre |
|---|---|---|---|---|---|---|---|
| 1 | $CH_3$- | $CH_3$- | $C_2H_5$- | benzyle | | 1,507 | |
| 2 | $CH_3$- | $C_2H_5$- | $C_2H_5$- | benzyle | | 1,506 | |
| 3 | $CH_3$- | $(CH_3)_2CH$- | $C_2H_5$- | benzyle | | 1,504 | |
| 4 | $CH_3$- | o-$CH_3$-$C_6H_4$- | $C_2H_5$- | benzyle | 146 | | |
| 5 | $CH_3$- | p-$CH_3$-$C_6H_4$- | $C_2H_5$- | benzyle | | | IR:1700 RMN:3,30-3,92 -11,5 |
| 6 | $C_2H_5$- | $CH_3$- | $C_2H_5$- | benzyle | | 1,507 | |
| 7 | n-$C_3H_7$- | $CH_3$- | $C_2H_5$- | benzyle | | | I.R : 1696 |
| 8 | n-$C_4H_9$- | $CH_3$- | $C_2H_5$- | benzyle | | 1,494 | |
| 9 | $CH_3$- | Cl-$CH_2$- | $C_2H_5$- | benzyle | | 1,514 | |
| 10 | cyclopropyle | $CH_3$- | $C_2H_5$- | benzyle | | 1,505 | |
| 11 | $CH_3$- | n-$C_4H_9$- | $C_2H_5$- | benzyle | | 1,491 | |
| 12 | $CH_3$- | n-$C_3H_7$- | $C_2H_5$- | benzyle | | 1,499 | |
| 13 | $CH_3$- | n-$C_6H_{13}$- | $C_2H_5$- | benzyle | | 1,496 | |
| 14 | $CH_3$- | $CF_3$- | $C_2H_5$- | benzyle | | 1,477 | |
| 15 | $CH_3$- | n-$C_{12}H_{25}$- | $C_2H_5$- | benzyle | | 1,496 | |
| 16 | $CH_3$- | Cl-$(CH_2)_3$- | $C_2H_5$- | benzyle | | 1,512 | |
| 17 | $C_6H_5$- | $CH_3$- | $C_2H_5$- | benzyle | 95 | | |
| 18 | n-$C_6H_{13}$- | $CH_3$- | $C_2H_5$- | benzyle | | | I.R : 1700 |
| 19 | $CH_3$- | $CH_3$- | H | benzyle | 205 | | |
| 20 | $CH_3$- | $C_2H_5$- | H | benzyle | 212 | | |
| 21 | $CH_3$- | $(CH_3)_2CH$- | H | benzyle | 220 | | |
| 22 | $CH_3$- | o-$CH_3$-$C_6H_4$- | H | benzyle | 205 | | |
| 23 | $CH_3$- | p-$CH_3$-$C_6H_4$- | H | benzyle | 224 | | |
| 24 | $C_2H_5$- | $CH_3$- | H | benzyle | | | RMN : 3,74-4,72 - 13,2 |
| 25 | n-$C_3H_7$- | $CH_3$- | H | benzyle | | | IR : 1696 |
| 26 | n-$C_4H_9$- | $CH_3$- | H | benzyle | | | RMN : 3,70 - 4,74 - 13 |
| 27 | $CH_3$- | Cl-$CH_2$- | H | benzyle | 155 | | |
| 28 | cyclopropyle | $CH_3$- | H | benzyle | 222 | | |
| 29 | $CH_3$- | n-$C_4H_9$- | H | benzyle | 218 | | |
| 30 | $CH_3$- | n-$C_3H_7$- | H | benzyle | 217 | | |
| 31 | $CH_3$- | $C_6H_{13}$- | H | benzyle | 206 | | |
| 32 | $CH_3$- | $CF_3$- | H | benzyle | 150 | | |
| 33 | $CH_3$- | $C_{12}H_{25}$- | H | benzyle | 185 | | |
| 34 | $CH_3$- | Cl-$(CH_2)_3$- | H | benzyle | 202 | | |
| 35 | $C_6H_5$- | $CH_3$- | H | benzyle | 204 | | |
| 36 | $C_6H_{13}$- | $CH_3$- | H | benzyle | 221 | | |
| 37 | $CH_3$- | $CH_3$- | H | H | 213 | | |
| 38 | $CH_3$- | $C_2H_5$- | H | H | 219 | | |
| 39 | $CH_3$- | $(CH_3)_2CH$- | H | H | 232 | | |
| 40 | $CH_3$- | o-$CH_3$-$C_6H_4$- | H | H | 217 | | |
| 41 | $CH_3$- | p-$CH_3$-$C_6H_4$- | H | H | 225 | | |
| 42 | $C_2H_5$- | $CH_3$- | H | H | 232 | | |
| 43 | n-$C_3H_7$- | $CH_3$- | H | H | 230 | | |
| 44 | n-$C_4H_9$- | $CH_3$- | H | H | 231 | | |
| 45 | $CH_3$- | Cl-$CH_2$- | H | H | 190 | | |
| 46 | cyclopropyle | $CH_3$- | H | H | 235 | | |
| 47 | $CH_3$- | n-$C_4H_9$- | H | H | 236 | | |
| 48 | $CH_3$- | n-$C_3H_7$- | H | H | 230 | | |
| 49 | $CH_3$- | $C_6H_{13}$- | H | H | 240 | | |
| 50 | $CH_3$- | $CF_3$- | H | H | 180 | | |
| 51 | $CH_3$- | $C_{12}H_{25}$- | H | H | 230 | | |
| 52 | $CH_3$- | Cl-$(CH_2)_3$- | H | H | 213 | | |
| 53 | $C_6H_5$- | $CH_3$- | H | H | 234 | | |
| 54 | $C_6H_{13}$- | $CH_3$- | H | H | 237 | | |

**Tableau (III)**

| nom français | nom américain | nom latin |
|---|---|---|
| amarante | pigweed | amaranthus retroflexus |
| abutilon | velvet leaf | abutilon theophrasti |
| | prickly soda | sida spinosa |
| | | sesbania |
| | cocklebur | xanthium pennsylvanicum |
| | | bidens |
| liseron | | polygonum convolvulus |
| maïs | corn | zea mays |
| stellaire | chickweed | stellaria media |
| chrysanthème | corn marigold | chrysanthemium |
| digitaire | crabgrass | digitaria sanguinalis |
| setaire | giant foxtail | setaria faberi |
| morelle | | solanum nigrum |
| cyperus | | cyperus esculentus |

**Tableau (II)**

| Composé n° | Espèces végétales P | RG | HAR | MOU | CHE |
|---|---|---|---|---|---|
| 37 | 100 | 98 | 100 | 100 | 100 |
| 38 | 98 | 95 | 100 | 100 | 100 |
| 39 | 98 | 95 | 100 | 100 | 100 |
| 40 | 20 | 30 | 0 | 100 | 30 |
| 41 | 0 | 20 | 100 | 98 | 80 |
| 42 | 80 | 70 | 100 | 100 | 100 |
| 43 | 60 | 20 | 100 | 95 | 80 |
| 44 | 0 | 0 | 0 | 80 | 80 |
| 45 | 40 | 70 | 100 | 100 | 98 |
| 46 | 0 | 10 | 100 | 90 | 50 |
| 47 | 20 | 10 | 100 | 100 | 60 |
| 48 | 80 | 80 | 100 | 100 | 80 |
| 50 | 100 | 100 | 100 | 100 | 100 |
| 52 | 30 | 0 | 100 | 100 | 20 |
| 53 | 10 | 0 | 0 | 80 | 20 |

**Revendications**

1. Composés caractérisés en ce qu'ils ont pour formule:

$$\begin{array}{ccccccccccccccc} & & OR^2 & & & & R^4 & & & & & & & & \\ & & | & & & & | & & & & & & & & \\ O & = & P & - & CH_2 & - & N & - & CH_2 & - & CO & - & N & - & SO_2 - R^1 \\ & & | & & & & & & & & & & | & & \\ & & OR^3 & & & & & & & & & & R & & \end{array} \quad (I)$$

dans laquelle

- $R^1$ représente un radical alkyle de 1 à 18 atomes de carbome, aryle de 6 à 18 atomes de carbone, cycloalkyle de 3 à 18 atomes de carbone, les dits radicaux étant éventuellement substitués par les atomes d'halogène, les groupes phényle, cyano, alkyle, alkoxyle, carboxylate d'alkyle dans lesquels les groupes alkyle ont 1 è 4 atomes de carbone;
- R représente l'atome d'hydrogène, ou a l'une des significations données pour $R_1$;

- $R^2$, $R^3$ représemtent un atome d'hydrogène ou sont un radical alkyle de 1 è 12 atomes de carbone, de préférence 1 à 8 atomes de carbone, un radical aryle de 6 à 12 atomes de carbone, les dits radicaux étant éventuellement subtitués par des substituants tels que ceux indiqués pour $R^1$;
- $R^4$ représente un atome d'hydrogène ou un radical Ar-C($R^5$)($R^6$)- dans laquelle Ar est un groupe aromatique, de préférence phényle, et $R^5$ et $R^6$ sont l'atome d'hydrogène ou un radical Ar ou un groupe alkyle ayant au plus 6 atomes de carbone, de préférence Ar-C($R^5$)($R^6$)- étant benzyle;

ainsi que les sels acceptables en agriculture de ces composés.

2. Composés selon la revendication 1 caractérisés en ce que $R^1$ est un radical de 1 à 7 atomes de carbone.

3. Composés selon la revendication 2 caractérisés en ce que $R^1$ est un radical cycloalkyle ayant de 3 à 7 atomes de carbone.

4. Composés selon la revendication 2 caractérisés en ce que $R^1$ est un radical alkyle ayant de 1 à 4 atomes de carbone éventuellement halogéné notamment chloré ou fluoré.

5. Composés selon la revendication 1 caractérisés en ce que R est un radical alkyle ayant de 1 à 4 atomes de carbone.

6. Composés selon la revendication 1 caractérisés en ce que R et $R^1$ sont le groupe méthyle.

7. Composés selon la revendications 1, caractérisés en ce que $R^2$, $R^3$ et éventuellement $R^4$ sont l'atome d'hydrogène.

8. Composé caractérisé en ce qu'il a pour formule:

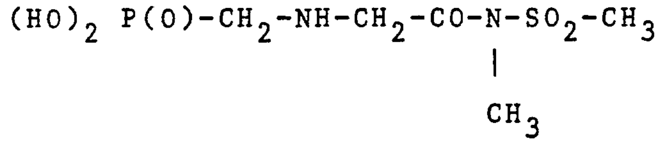

ainsi que les sels acceptables en agriculture de ce composé.

9. Composés caractérisés en ce qu'ils ont pour formule:

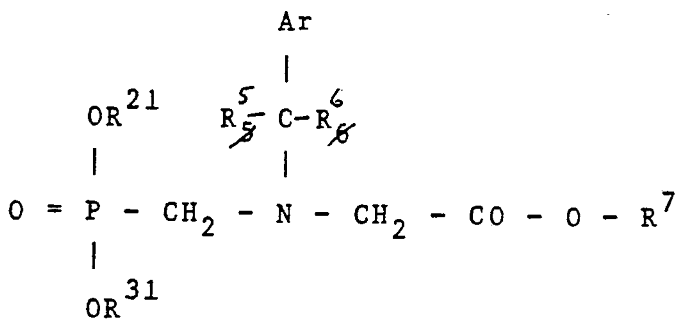

(II)

$R^{21}$, $R^{31}$ étant tels que défini respectivement pour $R^2$, $R^3$ dans la revendication 1 mais étant autres que l'atome d'hydrogène,

$R^7$ ayant l'une des significations indiquées pour $R^{21}$ et $R^{31}$,

Ar, $R^5$, $R^6$ étant tels que définis précédemment dans la revendication 1.

10. Procédé de préparation de composés de formule:

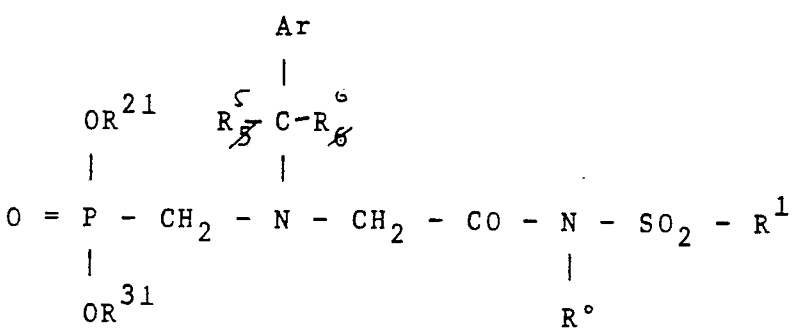

(I)

caractérisé en ce qu'on fait réagir un composé de formule:

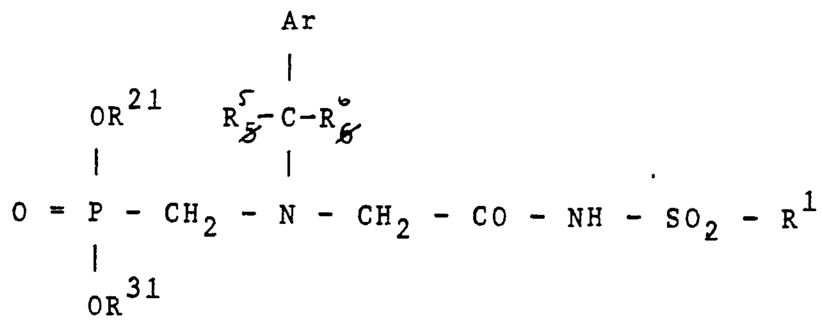

(III)

avec un composé de formule

R°X,

dans lesquelles

R° a la même signification que R sauf l'atome d'hydrogène, et

$R^1$, $R^{21}$, $R^{31}$, $R^5$, $R^6$, Ar ont les significations indiquées dans l'une ou l'autre des revendications 1 à 9, et

X est tel que HX est un acide protonique.

11. Procédé selon la revendication 10 caractérisé en ce que X est Cl, Br, I ou un groupe sulfate.

12. Procédé selon l'une des revendications 10 ou 11 caractérisé en ce que la réaction s'effectue dans un solvant entre -10 et 100°C et en présence d'un agent alcalin.

13. Procédé de préparation de composés de formule:

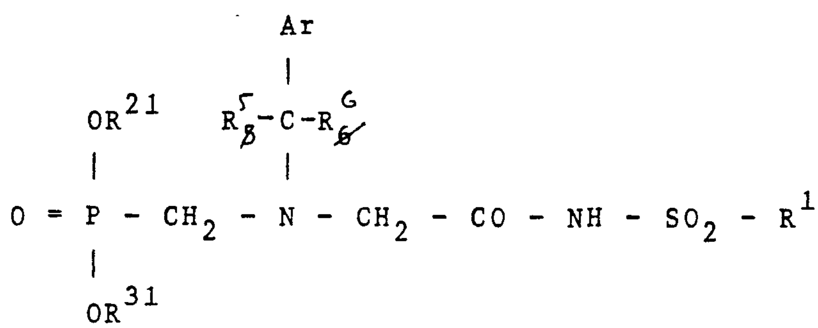

(III)

caractérisé en ce qu'on fait réagir un produit de formule:

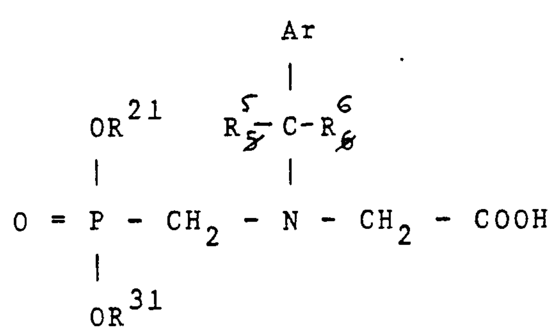

avec un sulfonylisothiocyanate de formule

$R^1$-$SO_2$-NCS,

$R^1$, $R^5$, $R^6$, Ar ayant les significatisons indiquées dans l'une ou l'autre des revendications 1 à 7 et

$R^{21}$, $R^{31}$ ayant l'une des significations indiquées dans la revendication 9.

14. Procédé selon la revendication 13 caractérisé en ce que la réaction est effectuée en présence d'un solvant d'un agent alcalin et à température comprise entre 10 et 120°C.

15. Procédé de préparation de composés de formule:

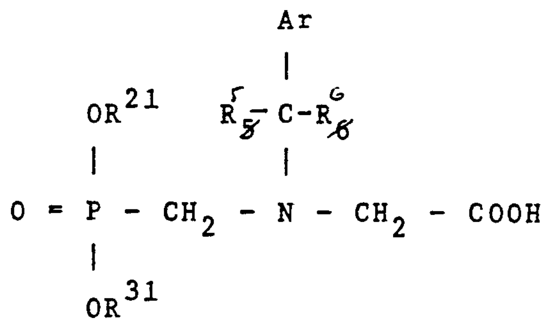

dans lesquels $R^5$, $R^6$, Ar ont les significations indiquées dans l'une ou l'autre des revendications 1 ou 7 et $R^{21}$, $R^{31}$ ont l'une des significations indiquées dans la revendication 9,
caractérisé en ce qu'on hydrolyse partiellement par mise en contact du composé de formule (II).

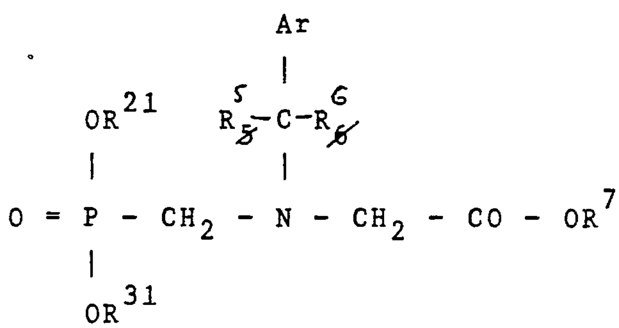

(II)

tel que défini à la revendication 9 avec une quantité d'agent alcalin sensiblement équimoléculaire.

16. Procédé de préparation de composés de formule:

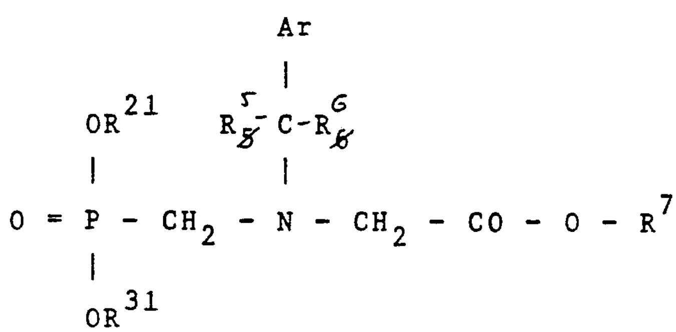

(II)

dans lesquels
$R^{21}$, $R^{31}$, $R^7$, $R^5$, $R^6$, Ar ont les significations indiquées dans la revendication 9, caractérisés en ce que l'on fait réagir du formaldéhyde avec un composé de formule
$R^{21}$-O-P(O)H-$OR^{31}$
et un composé de formule:

Ar-C($R^5$)($R^6$)-NH-$CH_2$-CO-O-$R^7$.

17. Procédé selon la revendication 16 caractérisé en ce que la réaction est effectuée entre 0 et 100° C.

18. Procédé de préparation de composés de formule:

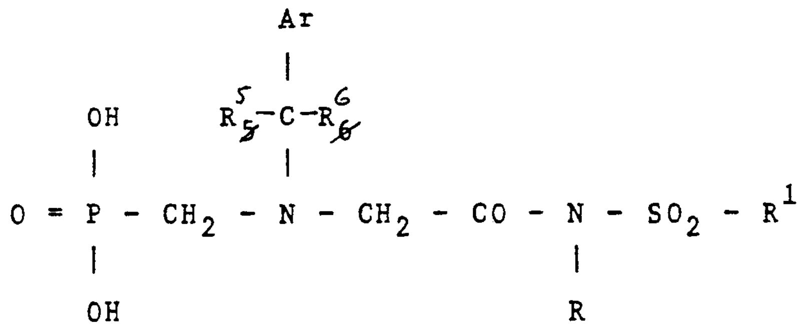

(V)

dans lesquels R, $R^1$, $R^5$, $R^6$, Ar ont les significations indiquées dans l'une des revendications 1 à 7 caractérisé en ce qu'on hydrolyse des produits de formule:

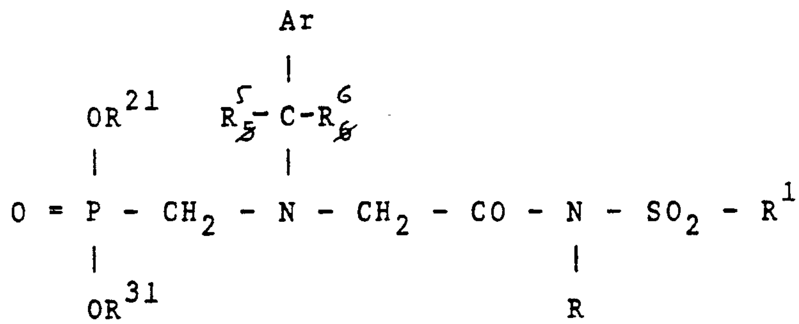

dans lesquels $R^{21}$, $R^{31}$ ont les significations indiquées dans la revendication 9.

19. Procédé de préparation de produits de formule:

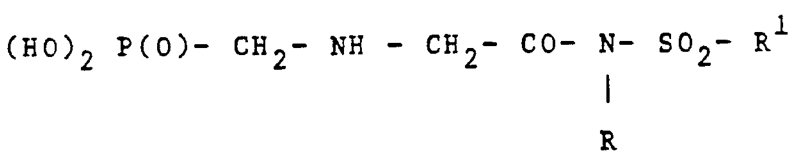

(VI)

dans laquelle R et $R^1$ ont les significations indiquées dans l'une ou l'autre des revendications 1 à 6 caractérisé en ce qu'on hydrogénolyse des produits de formule:

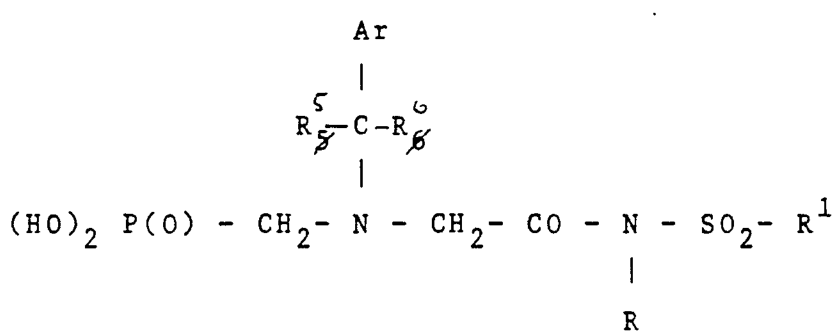

(V)

dans lesquels $R^5$, $R^6$, Ar ont les significations indiquées dans l'une des revendications 1 à 7.

20. Procédé de préparation de composés de formule:

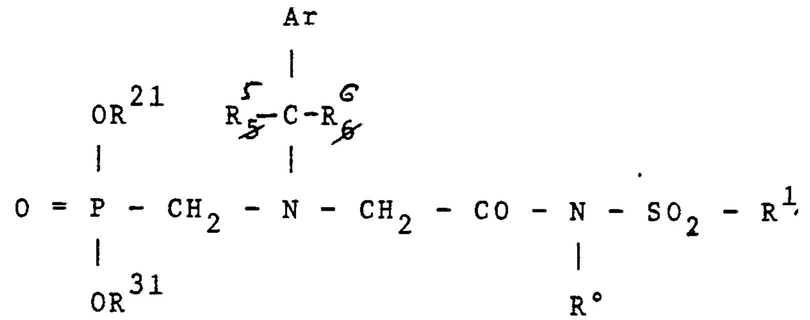

dans lesquels
R° à la même signification que dans la revendication 10,
$R^{21}$, $R^{31}$ ont la même signification que dans la revendication 9,
$R^1$, $R^5$, $R^6$, Ar étant tels que définis à l'une des revendications 1 à 7
caractérisé en ce qu'on fait réagir un sulfonamide de formule:
$R°-NH-SO_2-R^1$
avec un anhydride mixte de formule:

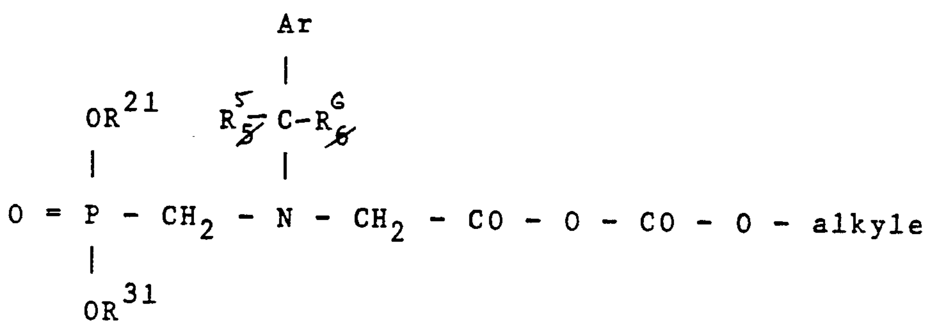

21. Procédé selon la revendication 20 caractérisé en ce que la réaction s'effectue en milieu biphasique eau/solvant organique en présence d'un agent alcalin et d'un sel d'ammonium quaternaire.

22. Compositions herbicides, caractérisées en ce qu'elles contiennent comme matière active un composé selon l'une des revendications 1 à 8, cette matière active étant en association avec au moins un support inerte, usuel, acceptable en agriculture.

23. Compositions selon la revendication 22 caractérisées en ce qu'elles contiennent 0,5 à 95 % de matière active.

24. Compositions selon l'une des revendications 22 ou 23 caractérisées en ce qu'elles contiennent 5 à 40 % d'agent tensioactif.

25. Compositions selon l'une des revendications 22 à 24 caractérisées en ce qu'elles sont sous forme de concentré émulsionnable.

26. Compositions selon l'une des revendications 22 à 24 caractérisées en ce qu'elles sont sous forme de poudre soluble ou de granulé autodispersible.

27. Procédé pour le désherbage, caractérisé en ce qu'on applique au contact des feuilles des végétaux à supprimer une dose efficace d'une matière active selon l'une des revendications 1 à 8.

28. Procédé selon la revendication 27, caractérisé en ce qu'on applique une composition selon l'une des revendications 22 à 26, la matière active étant appliquée à raison de 0,1 à 10 kg/ha, de préférence de 0,5 à 8 kg/ha.

**Patentansprüche**

1. Verbindungen, gekennzeichnet durch die Formel:

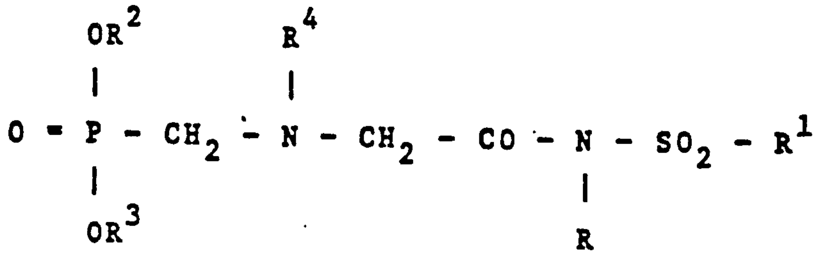 (I)

in der

- $R^1$ einen Alkylrest mit 1 bis 18 Kohlenstoffatomen, Arylrest mit 6 bis 18 Kohlenstoffatomen, Cycloalkylrest mit 3 bis 18 Kohlenstoffatomen bedeutet, wobei die erwähnten Reste gegebenenfalls substituiert sind durch Halogenatome, Phenyl-, Cyano-, Alkyl-, Alkoxy-, Alkylcarboxylatgruppen, wobei Alkylgruppen 1 bis 4 Kohlenstoffatome aufweisen;
- R ein Wasserstoffatom bedeutet oder eine der für $R^1$ angegebenen Bedeutungen hat;
- $R^2$ und $R^3$ ein Wasserstoffatom bedeuten oder einen Alkylrest mit 1 bis 12 Kohlenstoffatomen, vorzugsweise mit 1 bis 8 Kohlenstoffatomen, einen Arylrest mit 6 bis 12 Kohlenstoffatomen, wobei die Reste gegebenenfalls substituiert sind durch Substituenten wie sie für $R^1$ angegeben sind;
- $R^4$ ein Wasserstoffatom oder einen Rest Ar-C($R^5$)($R^6$)- bedeutet, wobei Ar eine aromatische Gruppe ist, vorzugsweise eine Phenylgruppe, und $R^5$ und $R^6$ (jeweils) ein Wasserstoffatom oder ein Rest Ar oder eine Alkylgruppe mit bis zu 6 Kohlenstoffatomen bedeutet, und Ar-C($R^5$)($R^6$)- vorzugsweise Benzyl ist; sowie die landwirtschaftlich annehmbaren Salze dieser Verbindung.

2. Verbindungen nach Anspruch 1,
dadurch gekennzeichnet, daß $R^1$ ein Rest mit 1 bis 7 Kohlenstoffatomen ist.

3. Verbindungen nach Anspruch 2,
dadurch gekennzeichnet, daß $R^1$ ein Cycloalkylrest mit 3 bis 7 Kohlenstoffatomen ist.

4. Verbindungen nach Anspruch 2,
dadurch gekennzeichnet, daß $R^1$ ein Alkylrest mit 1 bis 4 Kohlenstoffatomen ist, der gegebenenfalls halogeniert, insbesondere chloriert oder fluoriert ist.

5. Verbindungen nach Anspruch 1,
dadurch gekennzeichnet, daß R ein Alkylrest mit 1 bis 4 Kohlenstoffatomen ist.

6. Verbindungen nach Anspruch 1,
dadurch gekennzeichnet, daß R und $R^1$ die Methylgruppe sind.

7. Verbindungen nach Anspruch 1,
dadurch gekennzeichnet, daß $R^2$, $R^3$ und gegebenenfalls $R^4$ Wasserstoffatome sind.

8. Verbindungen, gekennzeichnet durch die Formel:

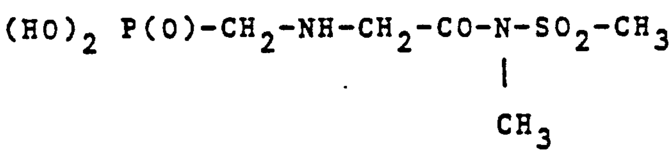

und deren landwirtschaftlich verträgliche Salze.

9. Verbindungen der Formel:

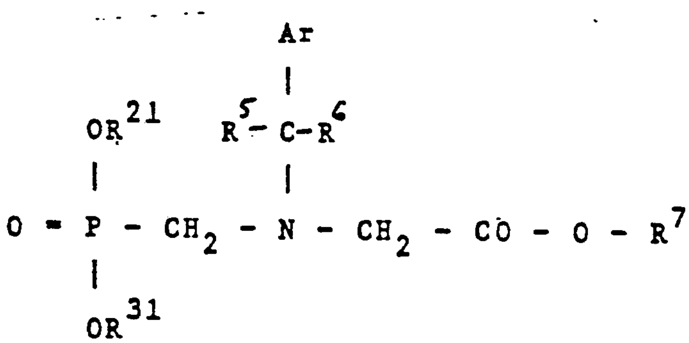 (II)

in der
$R^{21}$, $R^{31}$ die in Anspruch 1 für $R^2$ und $R^3$ angegebene Bedeutung haben, jedoch keine Wasserstoffatome sind,
$R^7$ eine der für $R^{21}$ und $R^{31}$ angegebenen Bedeutungen hat,
Ar, $R^5$, $R^6$ die oben in Anspruch 1 angegebenen Bedeutungen haben.

10. Verfahren zur Herstellung von Verbindungen der Formel:

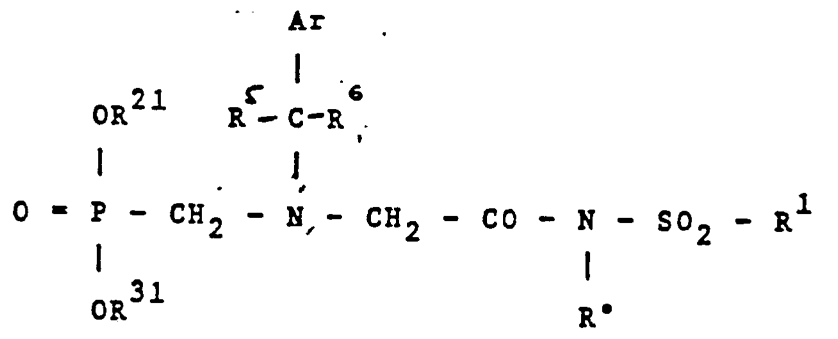
(I)

dadurch gekennzeichnet, daß man eine Verbindung der Formel:

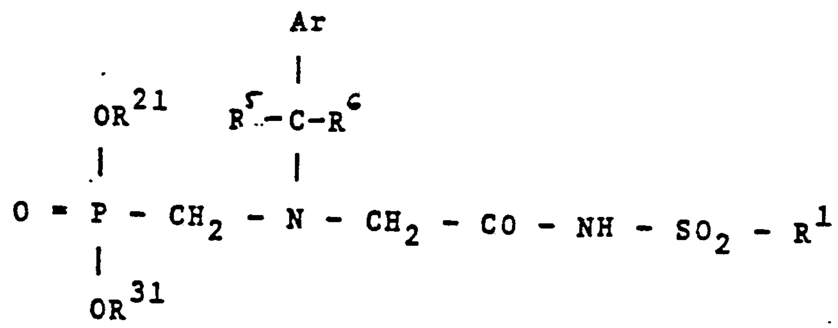
(III)

umsetzt mit einer Verbindung der Formel
R°X,
in denen
R° die gleiche Bedeutung hat wie R, außer Wasserstoffatom, und
$R^1$, $R^{21}$, $R^{31}$, $R^5$, $R^6$, Ar die in dem einen oder anderen der Ansprüche 1 bis 9 angegebene Bedeutung haben und
X so gewählt ist, daß HX eine protonische Säure bedeutet.

11. Verfahren nach Anspruch 10,
dadurch gekennzeichnet, daß X Cl, Br, I oder eine Sulfatgruppe ist.

12. Verfahren nach einem der Ansprüche 10 oder 11, dadurch gekennzeichnet, daß die Reaktion in einem Lösungsmittel zwischen -10 und 100°C und in Gegenwart eines alkalischen Mittels durchgeführt wird.

13. Verfahren zur Herstellung der Verbindungen der Formel:

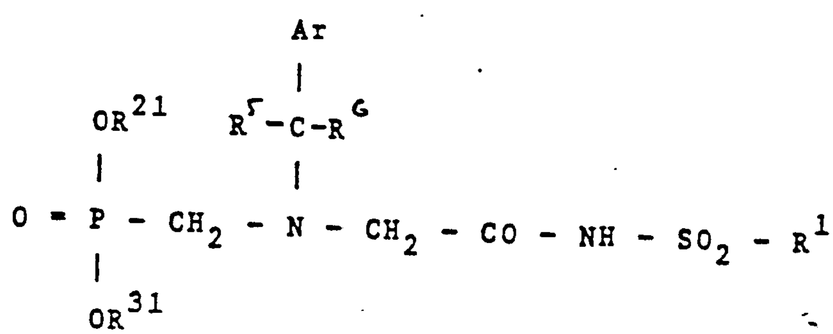
(III)

dadurch gekennzeichnet, daß man ein Produkt der Formel:

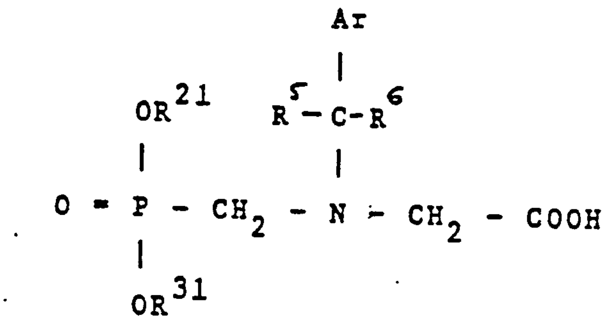

umsetzt mit einem Sulfonylisothiocyanat der Formel

$R^1$-$SO_2$-NCS,

wobei

$R^1$, $R^5$, $R^6$, Ar die in dem einen oder anderen der Ansprüche 1 bis 7 angegebene Bedeutung haben und

$R^{21}$, $R^{31}$ eine der in Anspruch 9 angegebene Bedeutungen haben.

14. Verfahren nach Anspruch 13,

dadurch gekennzeichnet, daß die Reaktion in Gegenwart eines Lösungsmittels, eines alkalischen Mittels und bei einer Temperatur zwischen 10 und 120°C durchgeführt wird.

15. Verfahren zur Herstellung von Verbindungen der Formel:

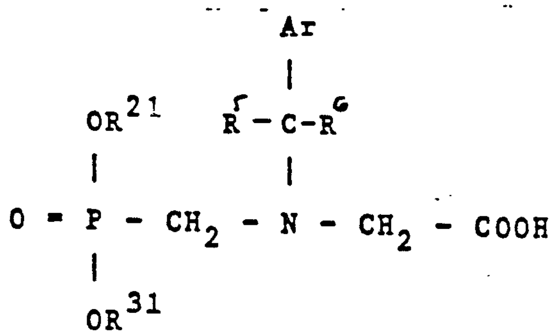

in denen

$R^5$, $R^6$, Ar die in dem einen oder anderen der Ansprüche 1 bis 7 angegebene Bedeutung haben und

$R^{21}$, $R^{31}$ eine der in Anspruch 9 angegebenen Bedeutungen haben,

dadurch gekennzeichnet, daß man eine Verbindung der Formel:

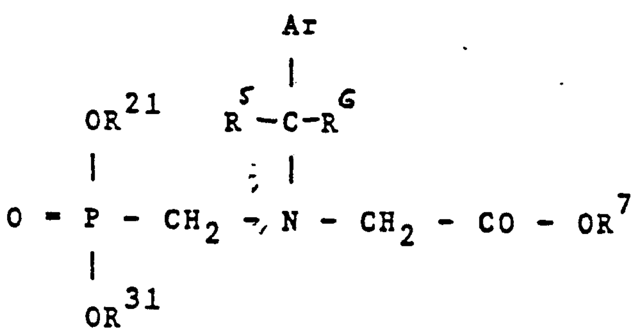

(II)

wie in Anspruch 9 definiert, partiell hydrolysiert, indem man sie in Kontakt bringt mit einer nahezu äquimolaren Menge des alkalischen Mittels.

16. Verfahren zur Herstellung von Verbindungen der Formel:

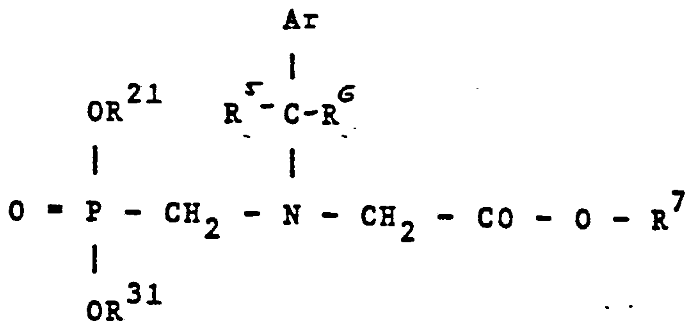

(II)

bei denen $R^{21}$, $R^{31}$, $R^7$, $R^5$, $R^6$, Ar die in Anspruch 9 angegebene Bedeutung haben, dadurch gekennzeichnet, daß man Formaldehyd mit einer Verbindung der Formel

$R^{21}$-O-P(O)H-OR
und einer Verbindung der Formel

Ar-C($R^5$)($R^6$)-NH-$CH_2$-CO-O-$R^7$

umsetzt.

17. Verfahren nach Anspruch 16, dadurch gekennzeichnet, daß man die Reaktion zwischen 0 und 100°C durchführt.

18. Verfahren zur Herstellung von Verbindungen der Formel:

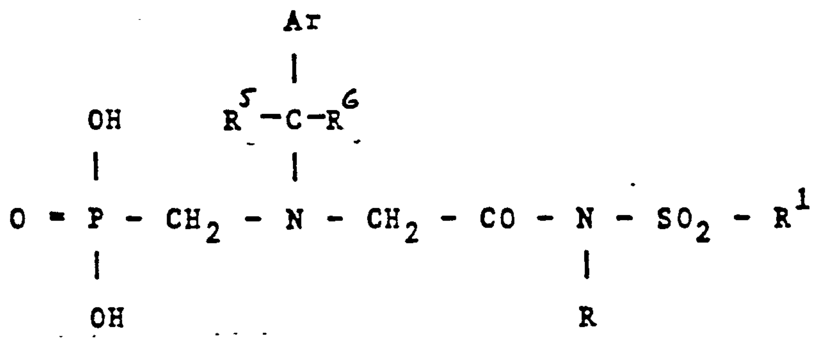

(V)

in der R, $R^1$, $R^5$, $R^6$, Ar die in einem der Ansprüche 1 bis 7 angegebene Bedeutung haben, dadurch gekennzeichnet, daß man Produkte der Formel:

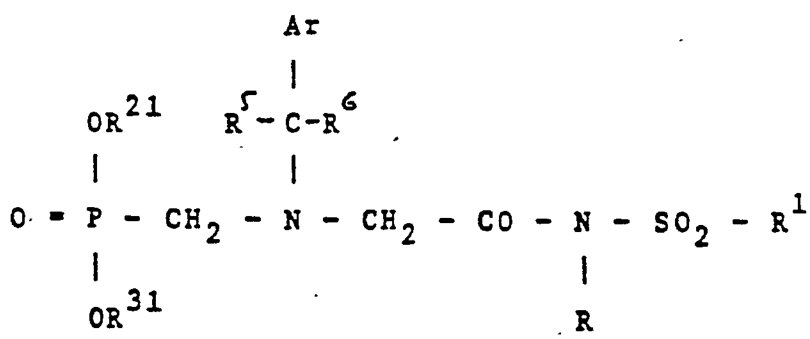

bei der $R^{21}$, $R^{31}$ die in Anspruch 9 angegebene Bedeutung haben, hydrolysiert.

19. Verfahren zur Herstellung von produkten der Formel:

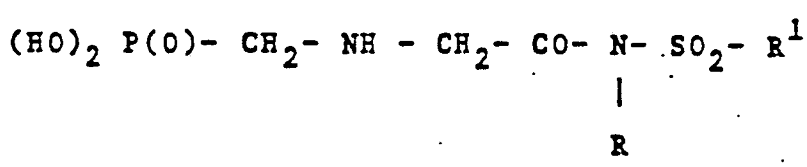

(VI)

in der R und $R^1$ die in dem einen oder anderen der Ansprüche 1 bis 6 angegebene Bedeutung haben, dadurch gekennzeichnet, daß man Produkte der Formel:

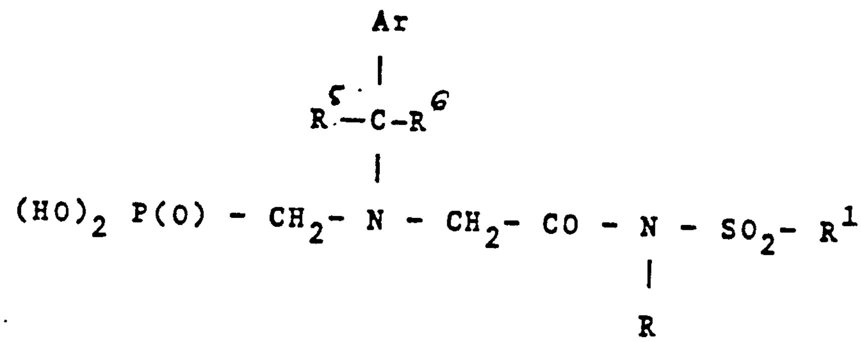

(V)

in denen $R^5$, $R^6$, Ar die in einem der Ansprüche 1 bis 7 angegebene Bedeutung haben, hydrogenolysiert.

20. Verfahren zur Herstellung von Verbindungen der Formel:

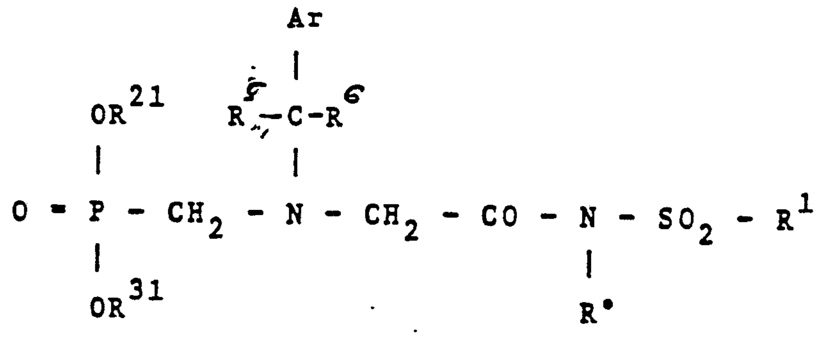

in der R° die gleiche Bedeutung hat wie in Anspruch 10 angegeben,
$R^{21}$, $R^{31}$ die gleiche Bedeutung haben wie in Anspruch 9 angegeben,
$R^1$, $R^5$, $R^6$, Ar die in einem der Ansprüche 1 bis 7 angegebene Bedeutung haben,
dadurch gekennzeichnet, daß man ein Sulfonamid der Formel $R^{\circ}\text{-NH-SO}_2\text{-R}^1$
mit einem gemischten Anhydrid der Formel:

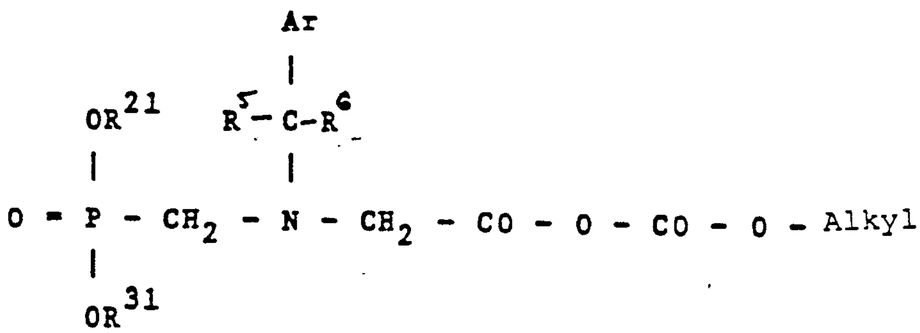

umsetzt.

21. Verfahren nach Anspruch 20,
dadurch gekennzeichnet, daß man die Reaktion in zweiphasigem Wasser/organisches Lösungsmittel-Milieu in Gegenwart eines alkalischen Mittels und eines guaternären Ammoniumsalzes durchführt.

22. Herbizide Mittel,
dadurch gekennzeichnet, daß sie als Wirkstoff eine Verbindung nach einem der Ansprüche 1 bis 8 enthalten, wobei der Wirkstoff zusammen mit mindestens einem inerten Träger, üblicherweise einem landwirtschaftlich annehmbaren Träger, vorliegt.

23. Mittel nach Anspruch 22,
dadurch gekennzeichnet, daß sie 0,5 bis 95 % Wirkstoff enthalten.

24. Mittel nach einem der Ansprüche 22 oder 23,
dadurch gekennzeichnet, daß sie 5 bis 40 % grenzflächenaktives Mittel enthalten.

25. Mittel nach einem der Ansprüche 22 bis 24, dadurch gekennzeichnet, daß sie in Form eines emulgierbaren Konzentrats vorliegen.

26. Mittel nach einem der Ansprüche 22 bis 24, dadurch gekennzeichnet, daß sie in Form eines löslichen Pulvers oder eines selbst dispergierbaren Granulats vorliegen.

27. Verfahren zur Unkrautbekämpfung, dadurch gekennzeichnet, daß man mit dem Laub der zu bekämpfenden Pflanzen eine wirksame Dosis eines Wirkstoffs nach einem der Ansprüche 1 bis 8 zusammenbringt.

28. Verfahren nach Anspruch 27, dadurch gekennzeichnet, daß man ein Mittel nach einem der Ansprüche 22 bis 26 aufbringt, wobei der Wirkstoff in einer Menge von 0,1 bis 10 kg/ha, vorzugsweise von 0,5 bis 8 kg/ha aufgebracht wird.

**Claims**

1. Compounds characterized in that they have the formula:

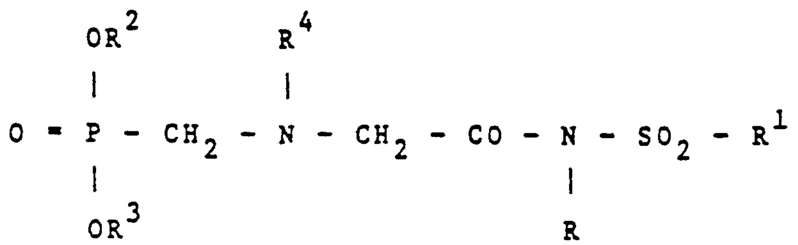

(I) (I)

in which

- $R^1$ denotes an alkyl radical with 1 to 18 carbon atoms, aryl radical with 6 to 18 carbon atoms or cycloalkyl radical with 3 to 18 carbon atoms, the said radicals being substituted, if desired, by halogen atoms or phenyl, cyano, alkyl, alkoxy or alkylcarboxylate groups in which the alkyl groups have 1 to 4 carbon atoms;
- R denotes the hydrogen atom or has one of the meanings given for $R^1$;
- $R^2$ and $R^3$ denote a hydrogen atom or are an alkyl radical with 1 to 12 carbon atoms, preferably 1 to 8 carbon atoms, an aryl radical with 6 to 12 carbon atoms, it being possible for the said radicals to be substituted, if desired, by substituents such as those indicated for $R^1$,;
- $R^4$ denotes a hydrogen atom or a radical Ar-C($R^5$)($R^6$) - in which Ar is an aromatic group, preferably phenyl, and $R^5$ and $R^6$ are the hydrogen atom or an Ar radical or an alkyl group containing not more than 6 carbon atoms, Ar-C($R^5$)($R^6$)- being preferably benzyl; and the agriculturally acceptable salts of these compounds.

2. Compounds according to Claim 1, characterized in that $R^1$ is a radical with 1 to 7 carbon atoms.

3. Compounds according to Claim 2, characterized in that $R^1$ is a cycloalkyl radical containing from 3 to 7 carbon atoms.

4. Compounds according to Claim 2, characterized in that $R^1$ is an alkyl radical containing from 1 to 4 carbon atoms, halogenated if desired, particularly chlorinated or fluorinated.

5. Compounds according to Claim 1, characterized in that R is an alkyl radical containing from 1 to 4 carbon atoms.

6. Compounds according to Claim 1, characterized in that R and $R^1$ are the methyl group.

7. Compounds according to Claim 1, characterized in that $R^2$, $R^3$ and, if desired, $R^4$ are the hydrogen atom.

8. Compound characterized in that it has the formula:

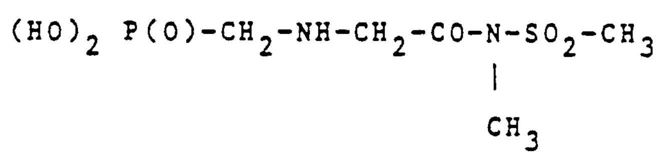

and the agriculturally acceptable salts of this compound.

9. Compounds characterized in that they have the formula:

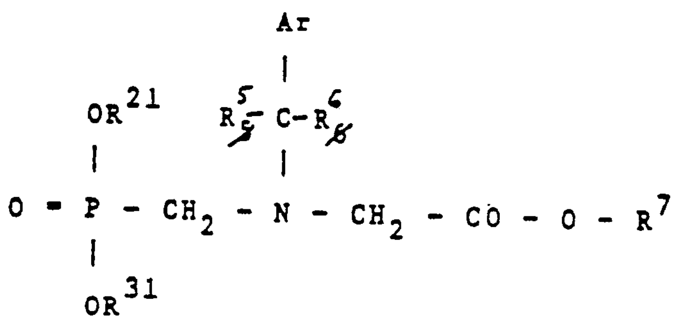

(II)

$R^{21}$ and $R^{31}$ being such as defined for $R^2$ and $R^3$ respectively in Claim 1, but being other than the hydrogen atom,

$R^7$ having one of the meanings shown for $R^{21}$ and $R^{31}$,

Ar, $R^5$ and $R^6$ being such as defined above in Claim 1.

10. Process for the preparation of compounds of formula:

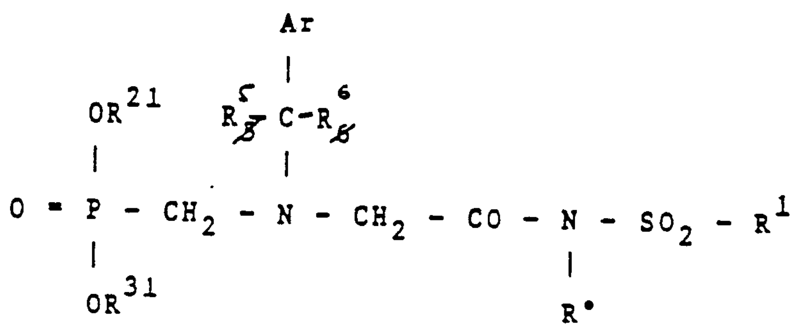

(I)

characterized in that a compound of formula:

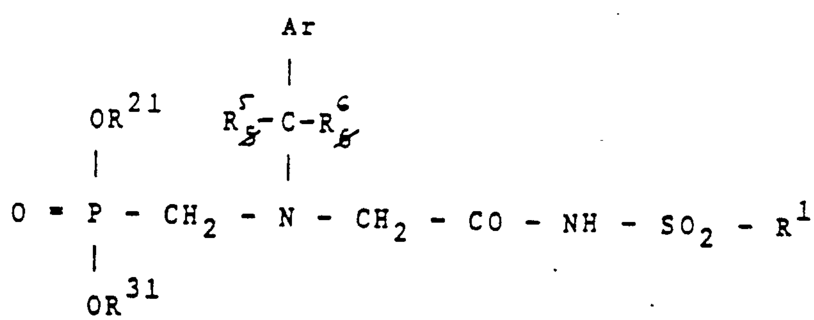

(III)

is reacted with a compound of formula

R°X,

in which

R° has the same meaning as R except for the hydrogen atom, and

$R^1$, $R^{21}$, $R^{31}$, $R^5$, $R^6$ and Ar have the meanings shown in any one of Claims 1 to 9, and

X is such that HX is a protonic acid.

11. Process according to Claim 10, characterized in that X is Cl, Br, I or a sulphate group.

12. Process according to either of Claims 10 and 11, characterized in that the reaction is carried out in a solvent between -10 and 100°C and in the presence of an alkaline agent.

13. Process for the preparation of compounds of formula:

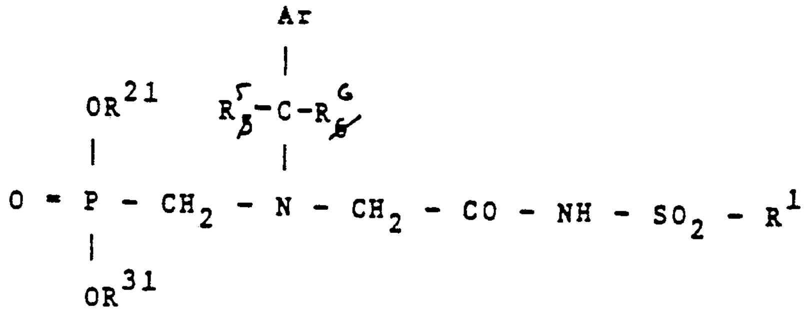

(III)

characterized in that a product of formula:

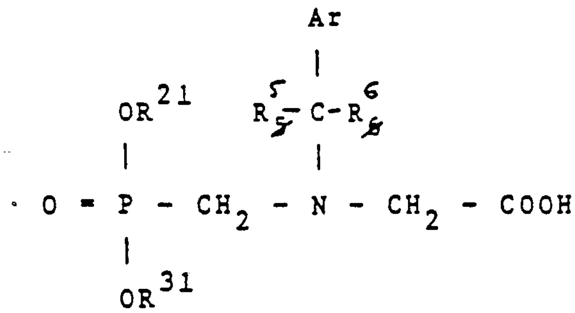

is reacted with a sulphonyl isothiocyanate of formula

$R^1$-$SO_2$-NCS,

$R^1$, $R^5$, $R^6$ and Ar having the meanings shown in any one of Claims 1 to 7 and $R^{21}$ and $R^{31}$ having one of the meanings shown in Claim 9.

14. Process according to Claim 13, characterized in that the reaction is carried out in the presence of a solvent of an alkaline agent at a temperature of between 10 and 120°C.

15. Process for the preparation of compounds of formula:

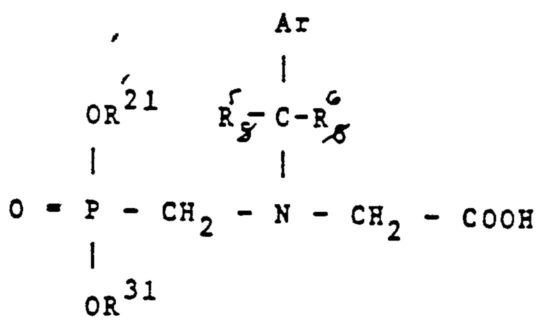

in which

$R_5$, $R_6$ and Ar have the meanings shown in either of Claims 1 and 7, and

$R^{21}$ and $R^{31}$ have one of the meanings shown in Claim 9,

characterized in that hydrolysis is carried out partially by bringing the compound of formula (II):

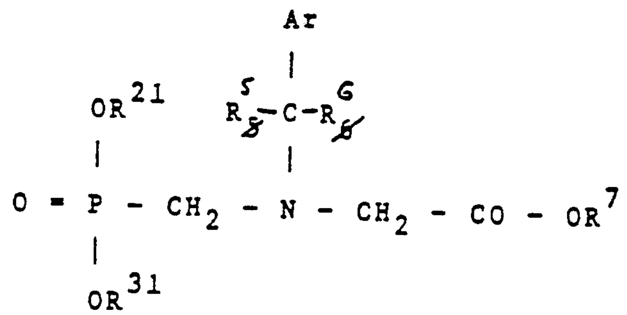

(II)

such as defined in Claim 9 into contact with a substantially equimolar quantity of alkaline agent.

16. Process for the preparation of compounds of formula:

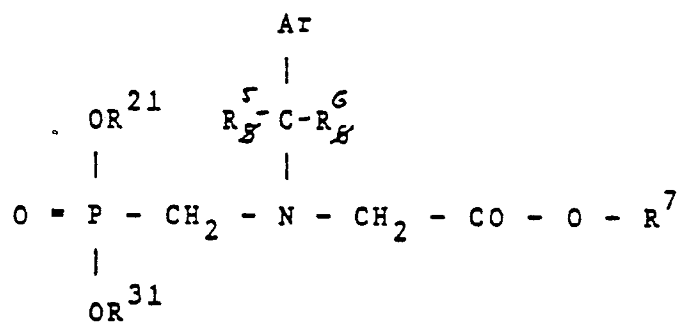

(II)

in which

$R^{21}$, $R^{31}$, $R^7$, $R^5$, $R^6$ and Ar have the meanings shown in Claim 9,
characterized in that formaldehyde is reacted with a compound of formula

$R^{21}$-O-P(O)H-$OR^{31}$

and a compound of formula Ar-C($R^5$)($R^6$)-NH-$CH_2$-CO-O-$R^7$.

17. Process according to Claim 16, characterized in that the reaction is carried out between 0 and 100° C.

18. Process for the preparation of compounds of formula:

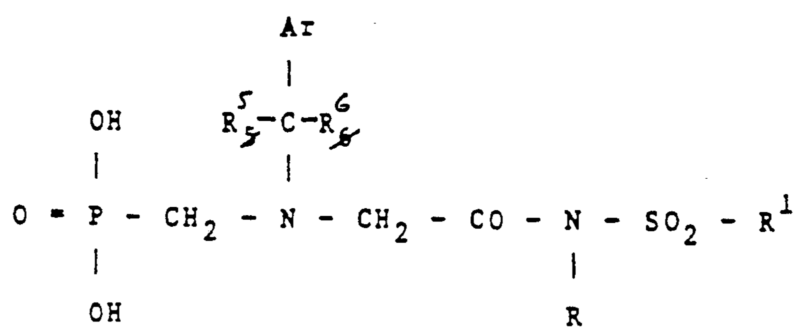

(V)

in which R, $R^1$, $R^5$, $R^6$ and Ar have the meanings shown in one of Claims 1 to 7, characterized in that products of formula:

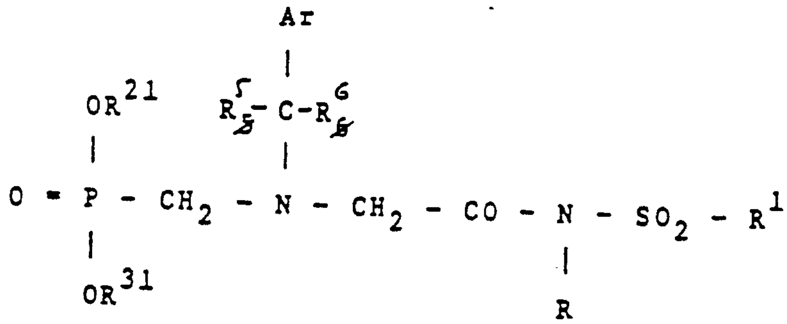

in which $R^{21}$ and $R^{31}$ have the meanings shown in Claim 9 are hydrolysed.

19. Process for the preparation of products of formula:

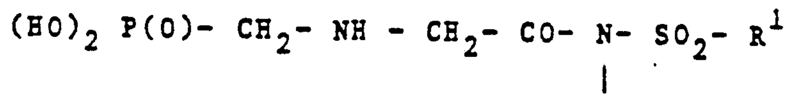

(VI)

in which R and $R^1$ have the meanings shown in any one of Claims 1 to 6, characterized in that products of formula:

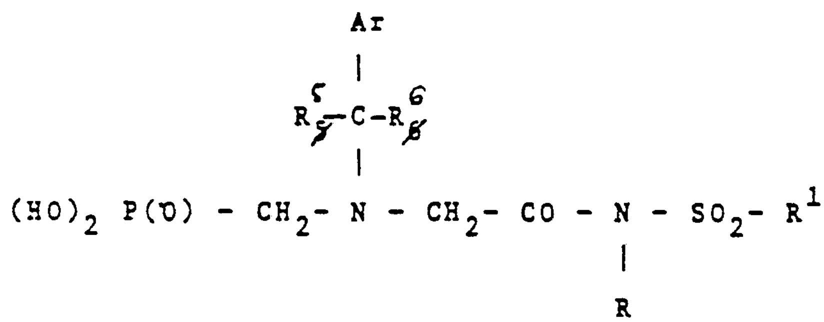

(V)

in which $R^5$, $R^6$ and Ar have the meanings shown in one of Claims 1 to 7 are subjected to hydrogenolysis.

20. Process for the preparation of compounds of formula:

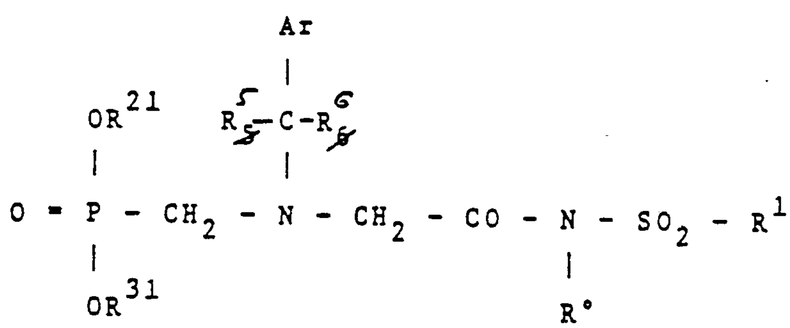

in which R° has the same meaning as in Claim 10, and
$R^{21}$ and $R^{31}$ have the same meaning as in Claim 9,
$R^1$, $R^5$, $R^6$ and Ar being such as defined in one of Claims 1 to 7,
characterized in that a sulphonamide of formula

$R°-NH-SO_2-R^1$

is reacted with a mixed anhydride of formula:

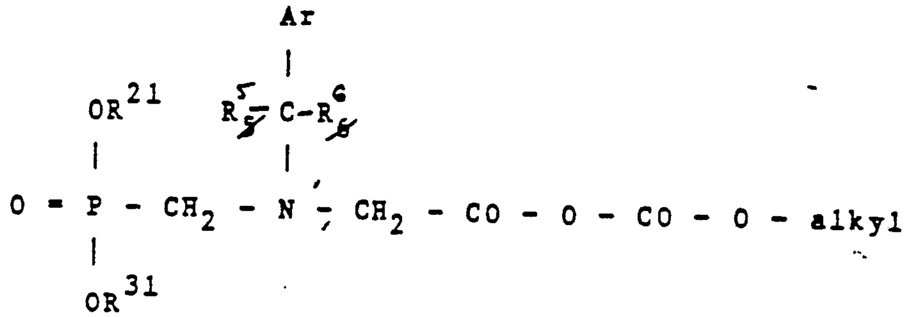

21. Process according to Claim 20, characterized in that the reaction is carried out in a water/organic solvent two-phase medium in the presence of an alkaline agent and of a quaternary ammonium salt.

22. Herbicidal compositions characterized in that they contain a compound according to one of Claims 1 to 8 as active substance, this active substance being in combination with at least one agriculturally acceptable, usual inert carrier.

23. Compositions according to Claim 22, characterized in that they contain 0.5 to 95 % of active substance.

24. Compositions according to either of Claims 22 and 23, characterized in that they contain 5 to 40 % of surface-active agent.

25. Compositions according to one of Claims 22 to 24, characterized in that they are in the form of an emulsifiable concentrate.

26. Compositions according to one of Claims 22 to 24, characterized in that they are in the form of a soluble powder or of a dry flowable.

27. Weeding process characterized in that an active substance according to one of Claims 1 to 8 is applied at an effective rate in contact with the foliage of the plants to be eliminated.

28. Process according to Claim 27, characterized in that a composition according to one of Claims 22 to 26 is applied, the active substance being applied in a proportion of 0.1 to 10 kg/ha, preferably 0.5 to 8 kg/ha.